# EUROPEAN PATENT APPLICATION

(11) **EP 4 838 523 A1**
(43) Date of publication of application: **11.11.2026**
(21) Application number: 24921529.4
(22) Date of filing: 17.10.2024
(51) Int. Cl.: G10L 19/04, G10L 19/24, G06N 3/02

(54) **AUDIO ENCODING METHOD AND APPARATUS, AND AUDIO DECODING METHOD AND APPARATUS**

(30) Priority: 01.02.2024 CN 202410144783
(71) Applicant: Huawei Technologies Co., Ltd., Shenzhen, Guangdong 518129 (CN)
(72) Inventor: GUO, Hao, Shenzhen, Guangdong 518129 (CN); XIA, Bingyin, Shenzhen, Guangdong 518129 (CN); LI, Lei, Shenzhen, Guangdong 518129 (CN)
(74) Representative: Eisenführ Speiser
(86) International application number: PCT/CN2024/125533
(87) International publication number: WO 2025/161505

(57) **Abstract**

Disclosed are an audio coding method and an apparatus. An encoding method includes: obtaining a first bitstream, where the first bitstream is obtained based on a first audio signal (701); obtaining side information, where the side information is obtained based on a second audio signal (702); obtaining a second bitstream based on the side information (703); and transmitting a bitstream, where the bitstream includes the first bitstream and the second bitstream (704).

## Description

### TECHNICAL FIELD

This application relates to audio processing technologies, and in particular, to an audio coding method and an apparatus.

### BACKGROUND

With the upgrade of communication systems, audio transmission quality has significantly improved. However, there are still some scenarios in which a transmission bandwidth is limited, and limited transmission bits cannot represent full-bandwidth signals. To resolve this problem, in a related technology, audio is divided into a low-frequency component and a high-frequency component. The low-frequency component is processed through encoding and decoding, and most transmission bits are allocated to a bitstream of the low-frequency component, to ensure coding quality of the low-frequency component. Then, the high-frequency component is restored at a decoder side using correlation between the high-frequency component and the low-frequency component through bandwidth extension. This bandwidth extension method is referred to as bandwidth extension (Bandwidth Extension, BWE). Compared with narrowband audio, audio obtained through BWE has noticeable improvement in perceptual quality.

However, the foregoing BWE method can lead to audio distortion due to weak correlation between a spectrum of the high-frequency component and a spectrum of the low-frequency component.

### SUMMARY

This application provides an audio coding method and an apparatus, to reconstruct more high-frequency details, thereby avoiding audio distortion.

According to a first aspect, this application provides an audio encoding method, including: obtaining a first bitstream, where the first bitstream is obtained based on a first audio signal, and the first audio signal is an audio signal whose frequency is lower than a preset threshold in a current frame; obtaining side information, where the side information is obtained based on a second audio signal, and the second audio signal includes an audio signal whose frequency is higher than or equal to the preset threshold in the current frame; obtaining a second bitstream based on the side information; and transmitting a bitstream, where the bitstream includes the first bitstream and the second bitstream.

In this embodiment, side information is extracted from audio by using a machine learning model, to guide a decoder side to implement non-blind BWE, thereby reconstructing a high-frequency component, especially a high-frequency component weakly associated with a low-frequency component. In this implementation, more details of the high-frequency component in the current frame may be reflected in feature information. These details are, for example, a feature of the high-frequency component and association between the high-frequency component and the low-frequency component. This helps reconstruct more high-frequency details, thereby avoiding audio distortion.

An audio frame sequence is obtained by sampling original audio, and the audio frame sequence includes a plurality of audio frames. Compression processing may be performed frame by frame at an encoder side. For ease of description, in embodiments of this application, an audio frame that is currently being processed is referred to as a current frame.

A feature of an audio signal included in the current frame may be represented by using a frequency, an amplitude, and a phase. In embodiments of this application, the first audio signal and the second audio signal are extracted from the current frame based on frequencies. The first audio signal is the audio signal whose frequency is lower than the preset threshold in the current frame (in embodiments of this application, an audio signal that meets this condition may also be referred to as a low-frequency signal or a low-frequency component). The second audio signal includes the audio signal whose frequency is higher than or equal to the preset threshold in the current frame (in embodiments of this application, an audio signal that meets this condition may also be referred to as a high-frequency signal or a high-frequency component). The preset threshold may be, for example, 16 kHz. This is not specifically limited in embodiments of this application. It should be noted that, in the foregoing descriptions, an audio signal whose frequency is equal to the preset threshold in the current frame is classified as the second audio signal. Optionally, in embodiments of this application, an audio signal whose frequency is equal to the preset threshold in the current frame may alternatively be classified as the first audio signal. This is not specifically limited herein.

In some possible implementations, the first audio signal may be extracted from the current frame via a low-pass filter.

In some possible implementations, a core encoder may be used to encode the first audio signal. For example, the core encoder may be an AVS3 core encoder. This is not specifically limited in embodiments of this application.

In this embodiment of this application, the second audio signal may have the following three cases:
(1) The second audio signal includes only a high-frequency component. In this case, the second audio signal is equivalent to a high-frequency component of the current frame. Correspondingly, the side information may include only feature information of the high-frequency component.
(2) In addition to the high-frequency component, the second audio signal further includes a part of audio signals in the low-frequency component, in other words, the second audio signal and the first audio signal have a part of same audio signals. In this case, the second audio signal is equivalent to the high-frequency component plus the part of the low-frequency component of the current frame. Correspondingly, in addition to the feature information of the high-frequency component, the side information may further include association information between the high-frequency component and the part of the low-frequency component.
(3) In addition to the high-frequency component, the second audio signal further includes all audio signals in the low-frequency component, in other words, the second audio signal includes the first audio signal. In this case, the second audio signal is equivalent to the current frame. Correspondingly, in addition to the feature information of the high-frequency component, the side information may further include the association information between the high-frequency component and the low-frequency component.

It can be learned that, the side information can guide the decoder side to implement non-blind BWE by occupying only a small quantity of transmission bits, to reconstruct the high-frequency component, especially reconstruct a signal based on a complex mapping relationship between the high-frequency component and the low-frequency component.

In some possible implementations, obtaining the side information may include: inputting the second audio signal into a second machine learning model obtained through pre-training to obtain the side information, where the second machine learning model includes at least one submodel. The at least one submodel may focus on different features. For example, a constraint is set for each submodel, including an input/output, a model structure, a processing rule, and the like. In this way, each submodel may focus on extracting side information of a corresponding feature.

In this embodiment of this application, for the second machine learning model, refer to the foregoing neural network, deep neural network, convolutional neural network, recurrent neural network, and the like. The machine learning model may reflect more details of the high-frequency component in the current frame in the feature information. These details are, for example, the feature of the high-frequency component and association between the high-frequency component and the low-frequency component. This helps reconstruct more high-frequency details.

In some possible implementations, the second machine learning model may include a plurality of submodels, and respective inputs of the plurality of submodels include an audio signal whose frequency is higher than or equal to the preset threshold in the current frame. In other words, the respective inputs of the plurality of submodels are a part of the second audio signal or the entire second audio signal.

In this embodiment of this application, if an input of a submodel includes only a high-frequency component, the submodel is mainly used to compress the high-frequency component into a feature, or represent the high-frequency component using the feature. If the input of the submodel includes a low-frequency component in addition to the high-frequency component, the submodel is further used to extract a mapping relationship between the high-frequency component and the low-frequency component. The plurality of submodels may be used to extract more diversified features from the side information. Therefore, a quantity, a type, a function, and the like of the submodel are not specifically limited in this application.

Respective outputs of n submodels include feature information 1, feature information 2, ..., and feature information n, and the side information is obtained through combination processing, in other words, the side information includes the feature information output by the n submodels.

In some possible implementations, a first submodel and at least one other submodel in the plurality of submodels include a same neuron, the same neuron is located in an input phase, an output phase, or an intermediate phase of the first submodel, and the first submodel is any one of the plurality of submodels.

The first submodel may have a same neuron (also referred to as a shared neuron) as one or more of the plurality of submodels included in the second machine learning model. The same neuron may have one or more layers, and the one or more layers of neurons may be located in the input phase, the output phase, or the intermediate phase of the submodel. The input phase refers to a first layer at an input end of the submodel and one or more layers after the first layer. The output phase refers to a last layer at an output end of the submodel and one or more layers before the last layer. The intermediate phase refers to one or more layers that do not include the first layer and the last layer of the submodel. It should be noted that a quantity, a type, and the like of the same neuron are not specifically limited in embodiments of this application, and locations of the input phase, the output phase, and the intermediate phase are not specifically limited either.

In some possible implementations, an input of the first submodel further includes a first input; when the second machine learning model includes the plurality of submodels, the first input includes an output of the at least one other submodel in the plurality of submodels, or the first input includes an output of at least one rule-based sub-manner; and the first submodel is any one of the plurality of submodels.

In some possible implementations, an input of the first submodel further includes a second input, and the second input is an audio signal obtained by performing redundant information processing on a first input; when the second machine learning model includes the plurality of submodels, the first input includes an output of the at least one other submodel in the plurality of submodels, or the first input includes an output of at least one rule-based sub-manner; and the first submodel is any one of the plurality of submodels.

It should be noted that the foregoing two examples are described by using two submodels as an example, but this is not intended to constitute a limitation on a serial connection relationship between submodels or between a submodel and a rule-based sub-manner. In addition to an input of any submodel, an input of the any submodel may further include outputs of one or more other submodels or an output obtained through redundancy information processing, and/or outputs of one or more rule-based sub-manners or an output obtained through redundancy information processing. A quantity of series connections and a series connection manner are not limited in embodiments of this application.

In some possible implementations, obtaining the side information may further include: performing processing on the second audio signal in a preset rule-based manner to obtain the side information, where the preset rule-based manner includes the at least one rule-based sub-manner.

In embodiments of this application, a method for extracting a feature in a preset rule-based manner may include, for example, extracting a spectral envelope, and extracting the feature via AVS3. The spectral envelope indicates energy of each frequency band in a spectrum of the current frame, and is used by the decoder side to restore energy of a corresponding frequency band. The feature extracted via AVS3 includes frequency band energy and identifiers of a harmonic feature and a noise feature of each frequency band, and is used by the decoder side to restore a BWE basis. Compared with a machine learning manner, the rule-based manner can retain information such as spectral energy, thereby avoiding impact on perceptual quality.

In embodiments of this application, based on the second machine learning model, the rule-based manner may be further set, and the second audio signal is processed in the rule-based manner, to obtain an output (feature information) corresponding to the second audio signal.

The side information is obtained by performing combination processing on the feature information 1 output by the second machine learning model and the feature information 2 output in the rule-based manner. In other words, the side information includes the feature information output by the second machine learning model and the feature information output in the rule-based manner.

In some possible implementations, the preset rule-based manner may include a plurality of rule-based sub-manners, and respective inputs of the plurality of rule-based sub-manners include an audio signal whose frequency is higher than or equal to the preset threshold in the current frame, in other words, the respective inputs of the plurality of rule-based sub-manners are a part of the second audio signal or the entire second audio signal.

Respective outputs of the n submodels and m rule-based manners include the feature information 1, the feature information 2, ..., the feature information n, feature information n+1, feature information n+2, ..., and feature information n+m. The side information is obtained through combination processing, in other words, the side information includes the feature information output by the n submodels and feature information output in the m rule-based manners.

In some possible implementations, an input of a first rule-based sub-manner further includes a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

In some possible implementations, an input of a first rule-based sub-manner further includes a fourth input, where the fourth input is an audio signal obtained by performing redundant information processing on a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

It should be noted that the foregoing examples are described by using two rule-based sub-manners as an example, but this is not intended to constitute a limitation on a serial connection relationship between rule-based sub-manners or between a rule-based sub-manner and a submodel. In addition to an input of any rule-based sub-manner, an input of the any rule-based sub-manner may further include outputs of one or more other rule-based sub-manners or an output obtained through redundancy information processing, and/or outputs of one or more submodels or an output obtained through redundancy information processing. A quantity of series connections and a series connection manner are not limited in embodiments of this application.

In some possible implementations, joint training may be performed on the second machine learning model and/or the rule-based manner for obtaining the side information. To be specific, information redundancy between feature groups is reduced or eliminated by jointly training a plurality of mechanisms for obtaining the side information (the mechanism may be the submodel or the rule-based sub-manner); a joint loss function is set for the plurality of mechanisms for obtaining the side information, and weights of the plurality of mechanisms for obtaining the side information are corrected through error back propagation, to achieve overall optimal effect of a plurality of pieces of feature information, thereby reducing or eliminating information redundancy between the feature groups; and each mechanism for obtaining the side information may have a respective loss function that is used to retain uniqueness of feature information extracted by the mechanism.

In this embodiment of this application, the side information may be encoded via a side information encoder. The side information encoder and the core encoder may use a same encoding algorithm, or may use different encoding algorithms. This is not specifically limited herein.

The bitstream obtained at the encoder side includes two parts: one part of the bitstream (the first bitstream) corresponds to the low-frequency component of the current frame, and the other part of the bitstream (the second bitstream) corresponds to the side information of the current frame. The encoder side transmits the bitstream to the decoder side, so that the decoder side obtains, based on the bitstream, a reconstructed low-frequency component and side information, thereby obtaining a reconstructed frame corresponding to the current frame.

According to a second aspect, this application provides an audio decoding method, including: receiving a bitstream, where the bitstream includes a first bitstream and a second bitstream; obtaining a first audio signal based on the first bitstream, where a frequency of the first audio signal is lower than a preset threshold; obtaining side information based on the second bitstream, where the side information is used to represent a feature of a second audio signal, and a frequency of the second audio signal is higher than or equal to the preset threshold; and obtaining a reconstructed frame based on the first audio signal and the side information.

In this embodiment, under guidance of the side information, a machine learning model is used to obtain a reconstructed frame based on a low-frequency component, especially a reconstructed frame in a scenario in which a high-frequency component is weakly associated with the low-frequency component or the high and low-frequency components have a close relationship but a complex mapping relationship. In this implementation, more details of the high-frequency component may be reflected in feature information. These details are, for example, a feature of the high-frequency component and association between the high-frequency component and the low-frequency component. This helps reconstruct more high-frequency details, thereby avoiding audio distortion.

In this embodiment of this application, a bitstream from an encoder side is received. Corresponding to the bitstream generated at the encoder side, the received bitstream also includes two parts: the first bitstream and the second bitstream.

In this embodiment of this application, a core decoder may parse the first bitstream to obtain the first audio signal,

The reconstructed frame to be obtained at a decoder side corresponds to a current frame at the encoder side. A feature of an audio signal included in the reconstructed frame may also be represented by using a frequency, an amplitude, and a phase. Based on frequency division, the reconstructed frame also includes the first audio signal and the second audio signal. The first audio signal is an audio signal whose frequency is lower than a preset threshold (in embodiments of this application, an audio signal that meets this condition may also be referred to as a low-frequency signal or a low-frequency component). The second audio signal is an audio signal whose frequency is higher than or equal to the preset threshold (in embodiments of this application, an audio signal that meets this condition may also be referred to as a high-frequency signal or a high-frequency component). That is, the reconstructed frame includes the low-frequency component and the high-frequency component. The preset threshold may be, for example, 16 kHz. This is not specifically limited in embodiments of this application. It should be noted that, in the foregoing descriptions, an audio signal whose frequency is equal to the preset threshold is classified as the second audio signal. Optionally, in embodiments of this application, an audio signal whose frequency is equal to the preset threshold may alternatively be classified as the first audio signal. This is not specifically limited herein.

Based on this, the first audio signal obtained based on the first bitstream may be the low-frequency component of the reconstructed frame, that is, the decoder side may directly obtain the low-frequency component of the reconstructed frame by parsing the bitstream.

The side information is used to represent a feature of the second audio signal. In addition, the side information may be further used to represent a mapping relationship between the high-frequency component and the low-frequency component. In this embodiment of this application, the side information can guide the decoder side to implement non-blind BWE by occupying only a small quantity of transmission bits, to reconstruct the high-frequency component, especially the high-frequency component that has the close relationship but has the complex mapping relationship with the low-frequency component.

In some possible implementations, obtaining the side information based on the second bitstream may include directly parsing the second bitstream to obtain the side information. The second bitstream is obtained by the encoder side by processing the side information. Therefore, the decoder side may directly parse the second bitstream to obtain the side information.

Optionally, the second bitstream is first parsed to obtain unprocessed side information, and then side information processing is performed on the unprocessed side information to obtain the side information. The side information processing includes inputting a third machine learning model obtained through pre-training or performing processing in a preset third rule-based manner.

In this embodiment of this application, information carried in the second bitstream may be the unprocessed side information associated with the side information. The information may be obtained by the encoder side based on the side information to further save a bitstream, and then encoded into the bitstream. Correspondingly, to obtain the side information, the decoder side may first parse the unprocessed side information obtained based on the second bitstream, and then obtain the side information based on the unprocessed side information. The foregoing method for obtaining the side information may include obtaining the side information by using the third machine learning model or in the preset third rule-based manner.

In some possible implementations, the reconstructed frame may be obtained based on the first audio signal and the side information by using a first machine learning model obtained through pre-training. Because the reconstructed frame is obtained based on the side information, to implement extension from the low-frequency component to the high-frequency component, obtaining the reconstructed frame may also be referred to as non-blind BWE.

In this embodiment of this application, for the first machine learning model, refer to the foregoing neural network, deep neural network, convolutional neural network, recurrent neural network, and the like.

Optionally, the reconstructed frame is directly output by the first machine learning model.

In this embodiment of this application, during non-blind BWE, a machine learning model (the first machine learning model) may be used; and under guidance of the side information, the reconstructed frame is directly output based on the low-frequency component (the first audio signal) obtained through decoding. In addition, the first machine learning model may complete coding distortion correction of the low-frequency component and possible audio rendering. This is not specifically limited in embodiments of this application.

Optionally, the reconstructed frame is obtained based on the second audio signal output by the first machine learning model and the first audio signal.

In this embodiment of this application, during non-blind BWE, a machine learning model (the first machine learning model) may be used; under guidance of the side information, a reconstructed high-frequency component is output based on the low-frequency component (the first audio signal) obtained through decoding; and the low-frequency component obtained through decoding and the reconstructed high-frequency component are combined or added, to obtain reconstructed audio. In addition, the first machine learning model may complete coding distortion correction of the low-frequency component and possible audio rendering. This is not specifically limited in embodiments of this application.

In some possible implementations, the first machine learning model may include a first submodel and a second submodel. During non-blind BWE, the first audio signal and first side information may be input into the first submodel to obtain a third audio signal; and then the third audio signal and second side information may be input into the second submodel to obtain the reconstructed frame. Each of the first side information and the second side information is a part of the side information or the entire side information.

In some possible implementations, during non-blind BWE, the first audio signal and third side information may be processed in a preset first rule-based manner to obtain a fourth audio signal; and then the fourth audio signal and fourth side information may be input into the first machine learning model to obtain the reconstructed frame. Each of the third side information and the fourth side information is a part of the side information or the entire side information.

In some possible implementations, during non-blind BWE, a fifth audio signal may be obtained based on the first audio signal and fifth side information by using the first machine learning model obtained through pre-training; and then processing may be performed based on the fifth audio signal and sixth side information in a preset second rule-based manner to obtain the reconstructed frame. Each of the fifth side information and the sixth side information is a part of the side information or the entire side information.

It should be noted that a plurality of pieces of side information may be a part of the side information or the entire side information, and the plurality of pieces of side information may be completely the same or completely different, or partially the same or partially different. This is not specifically limited herein.

According to a third aspect, this application provides an encoding apparatus, including: an obtaining module, configured to obtain a first bitstream, where the first bitstream is obtained based on a first audio signal, and the first audio signal is a low-frequency signal whose frequency is lower than a preset threshold in a current frame; an extraction module, configured to obtain side information, where the side information is obtained based on a second audio signal, and the second audio signal includes a high-frequency signal whose frequency is higher than or equal to the preset threshold in the current frame; an encoding module, configured to obtain a second bitstream based on the side information; and a transmission module, configured to transmit a bitstream, where the bitstream includes the first bitstream and the second bitstream.

In a possible implementation, the extraction module is specifically configured to input the second audio signal into a second machine learning model obtained through pre-training to obtain the side information, where the second machine learning model includes at least one submodel.

In a possible implementation, when the second machine learning model includes a plurality of submodels, respective inputs of the plurality of submodels include a part of the second audio signal or the entire second audio signal, where the part of the audio signal includes the high-frequency signal.

In a possible implementation, a first submodel and at least one other submodel in the plurality of submodels include a same neuron, the same neuron is located in an input phase, an output phase, or an intermediate phase of the first submodel, and the first submodel is any one of the plurality of submodels.

In a possible implementation, the side information includes feature information output by the plurality of submodels.

In a possible implementation, when the second machine learning model includes one submodel, the side information includes feature information output by the one submodel.

In a possible implementation, the extraction module is specifically configured to perform processing based on the second audio signal in a preset rule-based manner to obtain the side information, where the preset rule-based manner includes at least one rule-based sub-manner.

In a possible implementation, when the preset rule-based manner includes a plurality of rule-based sub-manners, respective inputs of the plurality of rule-based sub-manners include the part of the second audio signal or the entire second audio signal, where the part of the audio signal includes the high-frequency signal.

In a possible implementation, the side information includes feature information output in the plurality of rule-based sub-manners.

In a possible implementation, when the preset rule-based manner includes one rule-based sub-manner, the side information includes feature information output in the one rule-based sub-manner.

In a possible implementation, an input of the first submodel further includes a first input; when the second machine learning model includes the plurality of submodels, the first input includes an output of the at least one other submodel in the plurality of submodels, or the first input includes an output of the at least one rule-based sub-manner; and the first submodel is any one of the plurality of submodels.

In a possible implementation, an input of the first submodel further includes a second input, and the second input is an audio signal obtained by performing redundant information processing on a first input; when the second machine learning model includes the plurality of submodels, the first input includes an output of the at least one other submodel in the plurality of submodels, or the first input includes an output of the at least one rule-based sub-manner; and the first submodel is any one of the plurality of submodels.

In a possible implementation, an input of a first rule-based sub-manner further includes a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

In a possible implementation, an input of a first rule-based sub-manner further includes a fourth input, where the fourth input is an audio signal obtained by performing redundant information processing on a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

In a possible implementation, the apparatus further includes a filtering module, configured to obtain the first audio signal from the current frame in a low-pass filtering manner.

In a possible implementation, the second audio signal further includes a part of the first audio signal or the entire first audio signal.

According to a fourth aspect, this application provides a decoding apparatus, including: a receiving module, configured to receive a bitstream, where the bitstream includes a first bitstream and a second bitstream; an obtaining module, configured to obtain a first audio signal based on the first bitstream, where a frequency of the first audio signal is lower than a preset threshold; an extraction module, configured to obtain side information based on the second bitstream, where the side information is used to represent a feature of a second audio signal, and a frequency of the second audio signal is higher than or equal to the preset threshold; and a reconstruction module, configured to obtain a reconstructed frame based on the first audio signal and the side information.

In a possible implementation, the reconstruction module is specifically configured to obtain the reconstructed frame based on the first audio signal and the side information by using a first machine learning model obtained through pre-training.

In a possible implementation, the reconstructed frame is directly output by the first machine learning model, or the reconstructed frame is obtained based on the second audio signal output by the first machine learning model and the first audio signal.

In a possible implementation, when the first machine learning model includes a first submodel and a second submodel, the reconstruction module is specifically configured to: input the first audio signal and first side information into the first submodel to obtain a third audio signal; and input the third audio signal and second side information into the second submodel to obtain the reconstructed frame, where each of the first side information and the second side information is a part of the side information or the entire side information.

In a possible implementation, the reconstruction module is specifically configured to: perform processing based on the first audio signal and third side information in a preset first rule-based manner to obtain a fourth audio signal; and input the fourth audio signal and fourth side information into the first machine learning model to obtain the reconstructed frame, where each of the third side information and the fourth side information is a part of the side information or the entire side information.

In a possible implementation, the reconstruction module is specifically configured to: obtain a fifth audio signal based on the first audio signal and the fifth side information by using the first machine learning model obtained through pre-training; and perform processing based on the fifth audio signal and sixth side information in a preset second rule-based manner to obtain the reconstructed frame, where each of the fifth side information and the sixth side information is a part of the side information or the entire side information.

In a possible implementation, the extraction module is specifically configured to parse the second bitstream to obtain the side information.

In a possible implementation, the extraction module is specifically configured to: parse the second bitstream to obtain unprocessed side information; and perform side information processing on the unprocessed side information to obtain the side information, where the side information processing includes inputting a third machine learning model obtained through pre-training or performing processing in a preset third rule-based manner.

According to a fifth aspect, this application provides a device. The device includes: one or more processors; and a memory, configured to store one or more programs. When the one or more programs are executed by the one or more processors, the one or more processors are enabled to implement the method according to any one of the first aspect and the second aspect.

According to a sixth aspect, this application provides a computer-readable storage medium, including a computer program. When the computer program is executed on a computer, the computer is enabled to perform the method according to any one of the first aspect and the second aspect.

According to a seventh aspect, this application provides a computer program product. The computer program product includes computer program code. When the computer program code is run on a computer, the computer is enabled to perform the method according to any one of the first aspect and the second aspect.

### BRIEF DESCRIPTION OF DRAWINGS

FIG. 1 is a diagram of an application scenario 100 according to an embodiment of this application;
FIG. 2 is a diagram of another application scenario 200 according to an embodiment of this application;
FIG. 3 is a diagram of another application scenario 300 according to an embodiment of this application;
FIG. 4 is a diagram of another application scenario 400 according to an embodiment of this application;
FIG. 5 is a diagram of a structure of a terminal device 500 according to this application;
FIG. 6 is a diagram of a structure of an access network device 600 according to an embodiment of this application;
FIG. 7 is a flowchart of a process 700 of an audio encoding method according to an embodiment of this application;
FIG. 8a is a diagram of obtaining side information according to an embodiment of this application;
FIG. 8b is a diagram of obtaining side information according to an embodiment of this application;
FIG. 8c is a diagram of obtaining side information according to an embodiment of this application;
FIG. 8d is a diagram of obtaining side information according to an embodiment of this application;
FIG. 9a is a diagram of a same part of two submodels according to an embodiment of this application;
FIG. 9b is a diagram of a same part of two submodels according to an embodiment of this application;
FIG. 9c is a diagram of same parts of two submodels according to an embodiment of this application;
FIG. 10a is a diagram of a serial connection of submodels according to an embodiment of this application;
FIG. 10b is a diagram of a serial connection of submodels according to an embodiment of this application;
FIG. 11a is a diagram of a serial connection of rule-based sub-manners according to an embodiment of this application;
FIG. 11b is a diagram of a serial connection of rule-based sub-manners according to an embodiment of this application;
FIG. 12 is a diagram of joint training according to an embodiment of this application;
FIG. 13 is a flowchart of a process 1300 of an audio decoding method according to an embodiment of this application;
FIG. 14a is a diagram of non-blind BWE according to an embodiment of this application;
FIG. 14b is a diagram of non-blind BWE according to an embodiment of this application;
FIG. 14c is a diagram of non-blind BWE according to an embodiment of this application;
FIG. 14d is a diagram of non-blind BWE according to an embodiment of this application;
FIG. 14e is a diagram of non-blind BWE according to an embodiment of this application;
FIG. 14f is a diagram of non-blind BWE according to an embodiment of this application;
FIG. 15a is a diagram of obtaining a reconstructed frame according to an embodiment of this application;
FIG. 15b is a diagram of obtaining a reconstructed frame according to an embodiment of this application;
FIG. 16 is a diagram of a non-blind BWE coding framework including AI according to an embodiment of this application;
FIG. 17 is a diagram of a non-blind BWE coding framework including AI according to an embodiment of this application;
FIG. 18 is a diagram of a non-blind BWE coding framework including AI according to an embodiment of this application;
FIG. 19 is a flowchart of a side information extraction step according to an embodiment of this application;
FIG. 20 is a flowchart of a non-blind BWE step according to an embodiment of this application;
FIG. 21 and FIG. 22 are respectively diagrams of comparison between audio spectra obtained in three BWE manners;
FIG. 23 is a diagram of a non-blind BWE coding framework including AI according to an embodiment of this application;
FIG. 24 is a flowchart of a side information extraction step according to an embodiment of this application;
FIG. 25 is a flowchart of a non-blind BWE step according to an embodiment of this application;
FIG. 26 is a diagram of a structure of an encoding apparatus 2600 according to an embodiment of this application; and
FIG. 27 is a diagram of a structure of a decoding apparatus 2700 according to an embodiment of this application.

### DESCRIPTION OF EMBODIMENTS

To make objectives, technical solutions, and advantages of this application clearer, the following clearly and completely describes the technical solutions in this application with reference to accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. A method, system, product, or device is not necessarily limited to those steps or units expressly listed, but may include other steps or units not expressly listed or inherent to such a process, method, product, or device.

It should be understood that in this application, "at least one (item)" means one or more and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may represent a, b, c, a and b, a and c, b and c, or a, b, and c, where a, b, and c may be singular or plural.

Related nouns in this application are described below.

Audio frame: Audio data is in a stream form. In actual application, to facilitate audio processing and transmission, audio data within specific duration is usually selected as a frame of audio. The duration is referred to as "sampling time", and a value of the duration may be determined based on requirements of a codec and a specific application. For example, the duration ranges from 2.5 ms to 60 ms, where ms is milliseconds.

Audio signal: An audio signal is a frequency and amplitude change information carrier of a regular sound wave with voice, music, and sound effect. Audio is a continuously changing analog signal, and may be represented by a continuous curve and referred to as a sound wave. A digital signal generated based on audio through analog-to-digital conversion or by a computer is an audio signal. A sound wave has three important parameters: a frequency, an amplitude, and a phase. This determines features of an audio signal.

In addition, embodiments of this application relate to application of artificial intelligence (artificial intelligence, AI). For ease of understanding, the following first explains and describes some related nouns or terms used in embodiments of this application.

### (1) Neural network

The neural network (Neural Network, NN) is a machine learning model. The neural network may include neurons. The neuron may be an operation unit that uses xs and an intercept of 1 as inputs, where an output of the operation unit may be as follows: ${h}_{W , b} \left(x\right) = f \left({W}^{T}x\right) = f \left({\sum }_{s = 1}^{n} {W}_{s} {x}_{s} + b\right)$

Herein, s=1, 2, ..., n; n is a natural number greater than 1; *Wₛ* is a weight of *xₛ*; b is bias of the neuron; and f is an activation function (activation function) of the neuron, and is used to introduce a nonlinear feature into the neural network, to convert an input signal in the neuron into an output signal. The output signal of the activation function may serve as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

### (2) Deep neural network

The deep neural network (deep neural network, DNN), also referred to as a multi-layer neural network, may be understood as a neural network with many hidden layers. There is no special measurement standard for "many" herein. The DNN is divided based on locations of different layers, and a neural network in the DNN may be divided into three types: an input layer, a hidden layer, and an output layer. Generally, a first layer is the input layer, a last layer is the output layer, and a middle layer is the hidden layer. Layers are fully connected. To be specific, any neuron at an i^{th} layer is necessarily connected to any neuron at an (i+1)^{th} layer. Although the DNN seems complex, it is not complex in terms of work at each layer. Simply speaking, the DNN is the following linear relationship expression: y̅ = α(Wx̅ + b̅), where x̅ is an input vector, y̅ is an output vector, b̅ is a bias vector, W is a weight matrix (also referred to as a coefficient), and α() is an activation function. At each layer, the output vector y̅ is obtained by performing such a simple operation on the input vector x̅. Because the DNN includes a large quantity of layers, there are a large quantity of coefficients W and a large quantity of bias vectors b̅. These parameters are defined in the DNN as follows: The coefficient W is used as an example. It is assumed that in a three-layer DNN, a linear coefficient from a fourth neuron at a second layer to a second neuron at a third layer is defined as ${w}_{24}^{3}$. The superscript 3 represents a layer at which the coefficient W is located, and the subscript corresponds to an output third-layer index 2 and an input second-layer index 4. In conclusion, a coefficient from a k^{th} neuron at an (L-1)^{th} layer to a j^{th} neuron at an L^{th} layer is defined as ${W}_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix formed by vectors W at many layers).

### (3) Convolutional neural network

The convolutional neural network (convolutional neural network, CNN) is a deep neural network with a convolutional structure, and a deep learning (deep learning) architecture. In the deep learning architecture, multi-layer learning is performed at different abstract levels according to a machine learning algorithm. As a deep learning architecture, the CNN is a feed-forward (feed-forward) artificial neural network. Each neuron in the feed-forward artificial neural network may respond to an image input into the feed-forward artificial neural network. The convolutional neural network includes a feature extractor constituted by a convolutional layer and a pooling layer. The feature extractor may be considered as a filter. A convolution process may be considered as using a trainable filter to perform convolution on an input image or a convolutional feature map (feature map).

The convolutional layer is a neuron layer that is in the convolutional neural network and at which convolution processing is performed on an input signal. The convolutional layer may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. The dimension herein may be understood as being determined based on the "plurality of". Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows×columns) are the same. Sizes of feature maps extracted from the plurality of weight matrices with the same size are also the same, and then the plurality of extracted feature maps with the same size are combined to form an output of the convolution operation. Weight values in these weight matrices need to be obtained through a large amount of training in actual application. Each weight matrix including weight values obtained through training may be used to extract information from an input image, so that the convolutional neural network performs correct prediction. When the convolutional neural network has a plurality of convolutional layers, a large quantity of general features are usually extracted at an initial convolutional layer. The general feature may also be referred to as a low-level feature. As depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after a convolutional layer. One convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a small size. The average pooling operator may be used to perform calculation on pixel values in the image in a specific range, to generate an average value, and the average value is used as an average pooling result. The maximum pooling operator may be used to select a pixel with a maximum value in a specific range as a maximum pooling result. In addition, similar to the size of the weight matrix at the convolutional layer needing to be related to the size of the image, an operator at the pooling layer also needs to be related to the size of the image. A size of a processed image output from the pooling layer may be less than a size of an image input into the pooling layer. Each sample in the image output from the pooling layer represents an average value or a maximum value of a corresponding sub-region of the image input into the pooling layer.

After processing performed at the convolutional layer/pooling layer, the convolutional neural network is not ready to output required output information. As described above, at the convolutional layer/pooling layer, only a feature is extracted. Therefore, parameters resulting from the input image are reduced. However, to generate final output information (required class information or other related information), the convolutional neural network needs to use the neural network layer to generate an output of one required class or outputs of a group of required classes. Therefore, the neural network layer may include a plurality of hidden layers. Parameters included in the plurality of hidden layers may be obtained through pre-training based on related training data of a specific task type. For example, the task type may include image recognition, image classification, and super-resolution image reconstruction.

Optionally, at the neural network layer, the plurality of hidden layers are followed by the output layer of the entire convolutional neural network. The output layer has a loss function similar to a categorical cross entropy, and the loss function is specifically used to calculate a prediction error. Once forward propagation of the entire convolutional neural network is completed, back propagation is started to update a weight value and a bias at each layer mentioned above, to reduce a loss of the convolutional neural network and an error between a result output by the convolutional neural network via the output layer and an ideal result.

### (4) Recurrent neural network

The recurrent neural network (recurrent neural network, RNN) is used to process sequence data. In a conventional neural network model, layers from an input layer to a hidden layer and then to an output layer are fully connected, but nodes at each layer are not connected. Such a common neural network resolves many problems, but is still incapable of resolving many other problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter like W of the RNN is shared. This is different from the conventional neural network described in the foregoing example. In addition, during use of a gradient descent algorithm, an output in each step depends not only on a network in a current step, but also on a network status in several previous steps. The learning algorithm is referred to as a back propagation through time (back propagation through time, BPTT) algorithm.

Why is the recurrent neural network still needed when the convolutional neural network is available? A reason is simple. In the convolutional neural network, there is a premise that elements are independent of each other, and an input and an output are also independent, such as a cat and a dog. However, in the real world, many elements are connected to each other. For example, stocks change over time. For another example, a person says: "I like traveling, and my favorite place is Yunnan. I will go there when I have a chance". Herein, people should know that the person will go to "Yunnan". A reason is that the people can deduce the answer based on content of the context. However, how can a machine do this? The RNN emerges. The RNN is intended to make the machine capable of memorizing like a human. Therefore, an output of the RNN needs to depend on current input information and historical memory information.

### (5) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

### (6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

### (7) Generative adversarial network

The generative adversarial network (generative adversarial network, GAN) is a deep learning model. The model includes at least two modules: a generative model (generative model) and a discriminative model (discriminative model). The two modules learn from each other, to generate a better output. Both the generative model and the discriminative model may be neural networks, and may specifically be deep neural networks or convolutional neural networks. A basic principle of the GAN is as follows: Using a GAN for generating a picture as an example, it is assumed that there are two networks: G (Generator) and D (Discriminator). G is a network for generating a picture. G receives random noise z, and generates the picture based on the noise, where the picture is denoted as G(z). D is a discriminative network used to determine whether a picture is "real". An input parameter of D is x, x represents a picture, and an output D(x) represents a probability that x is a real picture. If a value of D(x) is 1, it indicates that the picture is 100% real. If the value of D(x) is 0, it indicates that the picture cannot be real. In a process of training the generative adversarial network, an objective of the generative network G is to generate a picture that is as real as possible to deceive the discriminative network D, and an objective of the discriminative network D is to distinguish between the picture generated by G and a real picture as much as possible. In this way, a dynamic "game" process, to be specific, "adversary" in the "generative adversarial network", exists between G and D. A final game result is that in an ideal state, G may generate a picture G(z) "that is to be difficultly distinguished from a real picture", and it is difficult for D to determine whether the picture generated by G is real, to be specific, D(G(z))=0.5. In this way, an excellent generative model G is obtained, and can be used to generate a picture.

Based on this, the following describes the technical solutions in embodiments of this application with reference to the accompanying drawings.

Embodiments of this application may be applied to audio encoder/decoders such as a terminal device, a radio access network device, a core network device, and the like.

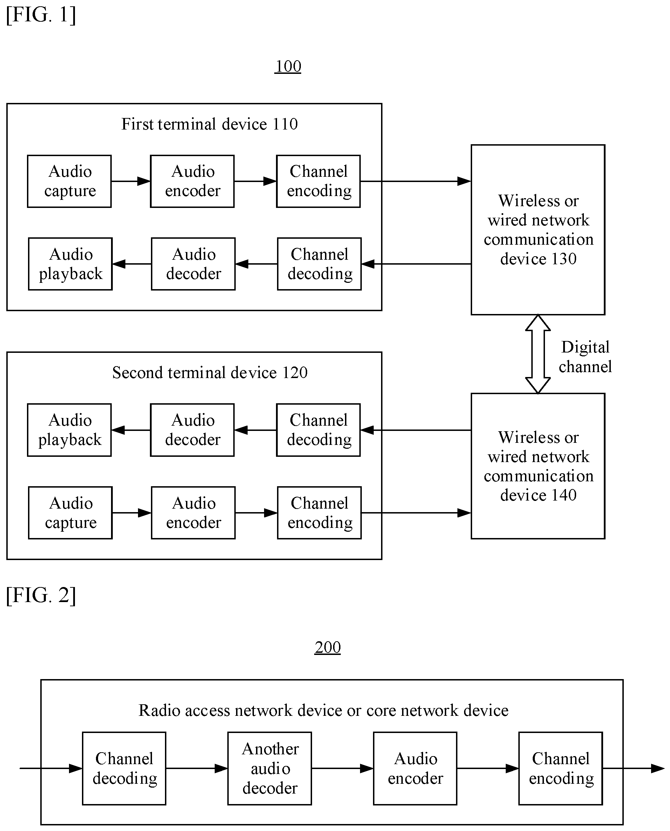

FIG. 1 is a diagram of an application scenario 100 according to an embodiment of this application. FIG. 1 is a diagram of a system architecture applied to a terminal device side according to an embodiment of this application. As shown in FIG. 1, the system architecture includes a first terminal device 110, a second terminal device 120, a wireless or wired network communication device 130, and a wireless or wired network communication device 140. The first terminal device 110 and the second terminal device 120 may be transmit devices, or may be receive devices. An example in which the first terminal device 110 is a transmit device, and the second terminal device 120 is a receive device is used for description.

In audio communication, an audio capture module in the first terminal device 110 is configured to collect an audio signal, an audio encoder performs audio encoding on the captured audio signal, and a channel encoding module performs channel encoding, to obtain a bitstream. Then, a signal is transmitted on a digital channel via the wireless or wired network communication device 130 at a transmitter side.

The wireless or wired network communication device 140 at a receiver side obtains, through the digital channel, the signal sent by the first terminal device 110, and transmits the signal to the second terminal device 120. The second terminal device 120 performs channel decoding via a channel decoding module based on the received signal, obtains the audio signal through decoding via an audio decoder, and then performs audio playback via an audio playback module based on the audio signal obtained through decoding.

It should be understood that, a case in which the second terminal device 120 is a transmit device and the first terminal device 110 is a receive device may be understood with reference to the case in which the first terminal device 110 is a transmit device and the second terminal device 120 is a receive device. Details are not described herein again.

It should be understood that the wireless or wired network communication device 130 and the wireless or wired network communication device 140 may alternatively be core network devices.

FIG. 2 is a diagram of another application scenario 200 according to an embodiment of this application. FIG. 2 is a diagram of a system architecture applied to a radio access network device or a core network device for transcoding according to an embodiment of this application. As shown in FIG. 2, the radio access network device or the core network device includes a channel decoding module, another audio decoder, an audio encoder, and a channel encoding module. During transcoding, corresponding audio coding processing needs to be performed. The radio access network device or the core network device performs channel decoding on a received signal via the channel decoding module, and then decodes an audio bitstream via the another audio decoder, to obtain the audio bitstream. The audio encoder re-encodes the audio bitstream, and then performs channel encoding to transmit an audio signal.

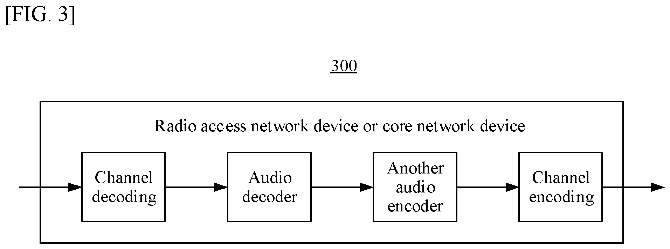

FIG. 3 is a diagram of another application scenario 300 according to an embodiment of this application. FIG. 3 is a diagram of a system architecture applied to a radio access network device or a core network device for transcoding according to an embodiment of this application. As shown in FIG. 3, the radio access network device or the core network device includes a channel decoding module, an audio decoder, another audio encoder, and a channel encoding module. During transcoding, corresponding audio coding processing needs to be performed. The radio access network device or the core network device performs channel decoding on a received signal via the channel decoding module, and then decodes an audio bitstream via the audio decoder, to obtain the audio bitstream. The another audio encoder re-encodes the audio bitstream, and then performs channel encoding to transmit an audio signal.

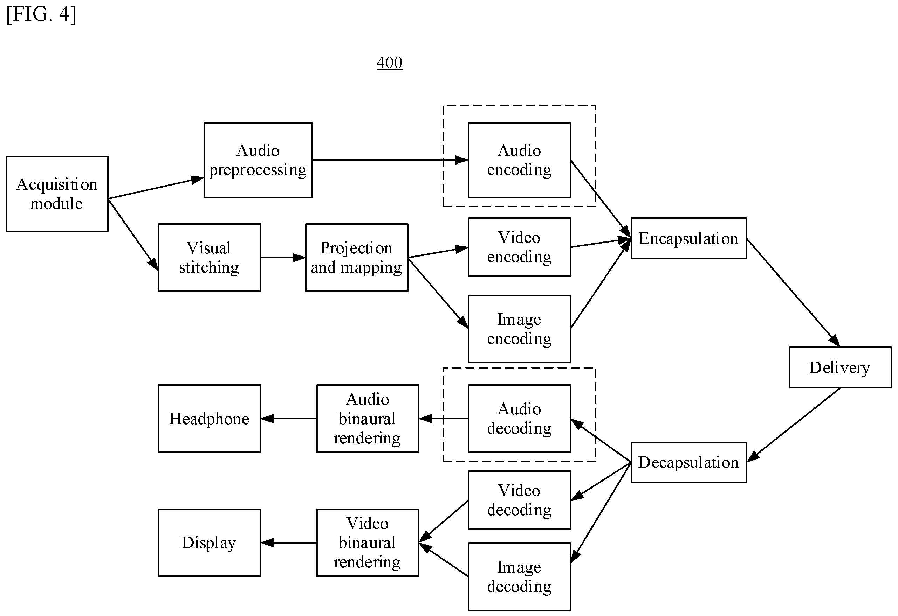

Embodiments of this application may be further applied to an audio encoding (Audio Encoding) module and an audio decoding (Audio Decoding) module in a virtual reality (Virtual Reality, VR) streaming service. FIG. 4 is a diagram of another application scenario 400 according to an embodiment of this application, as shown in a dashed box part in FIG. 4.

An end-to-end procedure of processing an audio signal is as follows: At a transmit end, an acquisition (Acquisition) module processes the audio signal and a video signal and then classifies the audio signal and the video signal into the audio signal and the video signal. A preprocessing (Audio Preprocessing) operation is performed on the audio signal. The preprocessing operation includes filtering out a low-frequency part in the audio signal, usually using 20 Hz or 50 Hz as a boundary point; extracting orientation information in the signal; and then performing audio encoding (Audio encoding). After visual stitching and projection and mapping are performed on the video signal, video encoding and image encoding are performed. After encapsulation (File/Segment encapsulation) is performed on an audio bitstream, a video bitstream, and an image bitstream, an encapsulated audio bitstream, an encapsulated video bitstream, and an encapsulated image bitstream are delivered (Delivery) to a decoder side.

The decoder side performs decapsulation (File/Segment decapsulation), separately performs audio decoding (Audio decoding), video decoding, and image decoding, and performs audio binaural rendering (Audio rendering) on the decoded audio signal. A signal obtained through the rendering is mapped to listener headphones (headphones). The headphone may be an independent headphone or a headphone on a glasses device like an HTC VIVE. Video binaural rendering (video rendering) is performed on the decoded video signal and a decoded image signal, and a signal obtained through the rendering is mapped to a display (display).

The terminal device in embodiments of this application may also be referred to as user equipment (user equipment, UE), a mobile station (mobile station, MS), a mobile terminal (mobile terminal, MT), an access terminal, a subscriber unit, a subscriber station, a remote station, a remote terminal, a mobile device, a user terminal, a terminal, a wireless communication device, a user agent, a user apparatus, or the like.

The terminal device may be a wireless terminal or a wired terminal. The wireless terminal may be a device that provides users with voice and/or other service data connectivity, a handheld device with a wireless connection function, or another processing device connected to a wireless modem. The wireless terminal may communicate with one or more core networks over a radio access network (Radio Access Network, RAN). The wireless terminal may be a mobile terminal, for example, a mobile phone (which is also referred to as a "cellular" phone) or a computer having a mobile terminal, for example, may be a portable, pocket-sized, handheld, computer built-in, or in-vehicle mobile apparatus, which exchanges voices and/or data with the radio access network. For example, the wireless terminal may be a device like a personal communication service (Personal Communication Service, PCS) phone, a cordless telephone, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a remote station (Remote Station), a remote terminal (Remote Terminal), an access terminal (Access Terminal), a user terminal (User Terminal), a user agent (User Agent), user equipment (User Device or User Equipment), a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted device, a terminal device in a 5G network, a terminal device in a future evolved public land mobile network (public land mobile network, PLMN), or the like. This is not limited in embodiments of this application.

By way of example, and not limitation, in embodiments of this application, the wearable device may also be referred to as a wearable intelligent device, and is a general name of wearable devices developed by intelligently designing daily wear by using a wearable technology, such as glasses, gloves, watches, clothing, and shoes. The wearable device is a portable device that is directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technology. A main technical feature of the IoT is to connect things to a network by using a communication technology, to implement an intelligent network for human-machine interconnection or thing-thing interconnection.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

In embodiments of this application, the terminal device may further include a relay (relay). Alternatively, it is understood that any device that can perform data communication with a base station may be considered as the terminal device.

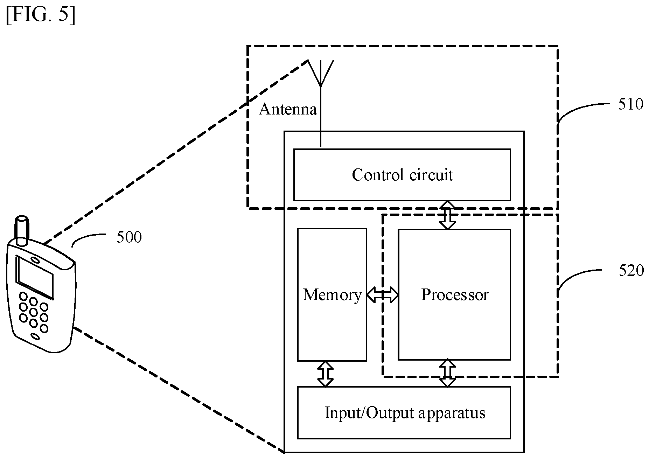

For example, FIG. 5 is a diagram of a structure of a terminal device 500 according to this application. The terminal device 500 may perform the actions performed by the terminal device in the foregoing embodiments.

For ease of description, FIG. 5 shows only main components of the terminal device. As shown in FIG. 5, the terminal device 500 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device to perform the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send radio frequency signals in a form of an electromagnetic wave. The input/output apparatus, for example, a touchscreen, a display, or a keyboard, is mainly configured to: receive data input by a user and output data to the user.

After the terminal device is powered on, the processor may read a software program in a storage unit, interpret and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, via the antenna, a radio frequency signal in a form of an electromagnetic wave. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data.

A person skilled in the art may understand that, for ease of description, FIG. 5 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 5 integrates functions of the baseband processor and the central processing unit. A person skilled in the art may understand that the baseband processor and the central processing unit may alternatively be individually independent processors, and are interconnected by using a technology like a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 510 of the terminal device 500, and the processor that has a processing function may be considered as a processing unit 520 of the terminal device 500. The processing unit 520 may also implement a function of an obtaining unit. As shown in FIG. 5, the terminal device 500 includes the transceiver unit 510 and the processing unit 520. The transceiver unit may also be referred to as a transceiver, a transceiver machine, a transceiver apparatus, or the like. Optionally, a component that is in the transceiver unit 510 and that is configured to implement a receiving function may be considered as a receiving unit, and a component that is in the transceiver unit 510 and that is configured to implement a sending function may be considered as a sending unit. That is, the transceiver unit includes the receiving unit and the sending unit. For example, the receiving unit may also be referred to as a receiver, a receive machine, or a receiving circuit, and the sending unit may also be referred to as a transmitter, a transmit machine, or a transmitting circuit.

An access network device in embodiments of this application may be a device for communicating with a terminal device, may be a base station, an access point, or a network device, or may be a device that communicates with a wireless terminal over an air interface in an access network by using one or more sectors. The network device may be configured to mutually convert a received over-the-air frame and an IP packet and serve as a router between the wireless terminal and a remaining part of the access network, where the remaining part of the access network may include an internet protocol (IP) network. The network device may further coordinate attribute management of the air interface. For example, the access network device may be a base station (Base Transceiver Station, BTS) in a global system for mobile communication (Global System for Mobile communication, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (evolved NodeB, eNB or eNodeB) in an LTE system, or may be a radio controller in a cloud radio access network (cloud radio access network, CRAN) scenario. Alternatively, the access device may be a relay station, an access point, a vehicle-mounted device, a wearable device, an access device in the 5G network, a network device in the future evolved PLMN network, or the like, may be an access point (access point, AP) in a WLAN, or may be a gNB in a new radio (new radio, NR) system. This is not limited in embodiments of this application. It should be noted that, in a 5G system, there may be one or more transmission reception points (Transmission Reception Point, TRP) under one base station. All TRPs belong to a same cell, and a measurement reporting method described in embodiments of this application may be used for each of the TRPs and the terminal. In another scenario, the network device may be further divided into a control unit (Control Unit, CU) and a data unit (Data Unit, DU). There may be a plurality of DUs under one CU. The measurement reporting method described in embodiments of this application may be used for each DU and the terminal. A difference between a CU-DU separation scenario and a multi-TRP scenario lies in that a TRP only serves as a radio frequency unit or an antenna device, but a DU may implement a protocol stack function, for example, the DU may implement a physical layer function.

In addition, in embodiments of this application, the access network device is a device in an access network (radio access network, RAN), or in other words, a RAN node that connects the terminal device to a wireless network. For example, by way of example, and not limitation, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP).

The access network device provides a service for a cell. The terminal device communicates with the access network device by using a transmission resource (for example, a frequency domain resource, or a spectrum resource) used for the cell. The cell may be a cell corresponding to the access network device (for example, a base station), and the cell may belong to a macro base station, or may belong to a base station corresponding to a small cell (small cell). The small cell herein may include: a metro cell (metro cell), a micro cell (micro cell), a pico cell (pico cell), a femto cell (femto cell), and the like. These small cells have features of small coverage and low transmit power, and are suitable for providing a high-rate data transmission service.

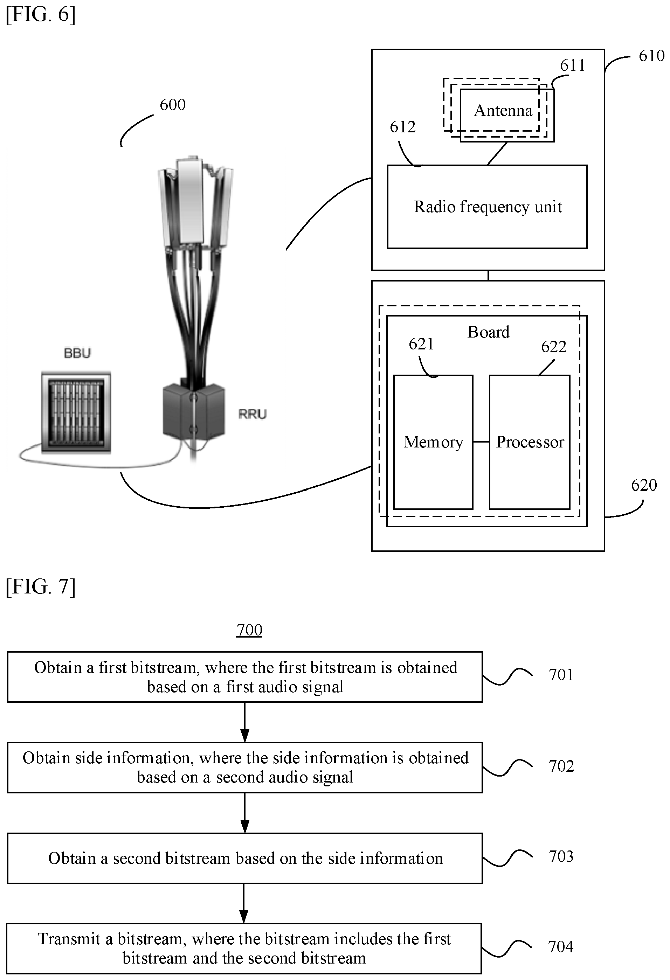

For example, FIG. 6 is a diagram of a structure of an access network device 600 according to an embodiment of this application. The access network device 600 may be configured to implement functions of the radio access network device in the foregoing embodiments. The access network device 600 includes one or more radio frequency units such as a remote radio unit (remote radio unit, RRU) 66, and one or more baseband units (baseband unit, BBU) (which may also be referred to as a digital unit, DU) 620. The RRU 66 may be referred to as a transceiver unit, a transceiver machine, a transceiver circuit, a transceiver, or the like, and may include at least one antenna 611 and a radio frequency unit 612. The RRU 66 part is mainly configured to: send and receive a radio frequency signal, and perform conversion between the radio frequency signal and a baseband signal, for example, is configured to send the signaling message in the foregoing embodiments to the terminal device. The BBU 620 part is mainly configured to perform baseband processing, control a base station, and the like. The RRU 66 and the BBU 620 may be physically disposed together, or may be physically separated, that is, a distributed base station.

The BBU 620 is a control center of the base station, may also be referred to as a processing unit, and is mainly configured to complete baseband processing functions such as channel coding, multiplexing, modulation, and spreading. For example, the BBU (the processing unit) 620 may be configured to control the access network device to perform an operation procedure related to the access network device in the foregoing method embodiments.

In an example, the BBU 620 may include one or more boards, and a plurality of boards may jointly support a radio access network (for example, the LTE system, the 5G system, or a future radio access network system) of a single access standard, or may support radio access networks of different access standards. The BBU 620 further includes a memory 621 and a processor 622. The memory 621 is configured to store necessary instructions and data. For example, the memory 621 stores the codebook and the like in the foregoing embodiments. The processor 622 is configured to control the base station to perform a necessary action, for example, configured to control the base station to perform an operation procedure related to the network device in the foregoing method embodiments. The memory 621 and the processor 622 may serve the one or more boards. In other words, a memory and a processor may be disposed on each board. Alternatively, a plurality of boards may share a same memory and a same processor. In addition, a necessary circuit may further be disposed on each board.

In a possible implementation, with development of a system-on-chip (system-on-chip, SoC) technology, all or some functions of the part 620 and the part 66 may be implemented by using the SoC technology, for example, implemented via a base station function chip. The base station function chip integrates components such as a processor, a memory, and an antenna port. A program for a base station-related function is stored in the memory. The processor executes the program to implement the base station-related function. Optionally, the base station function chip can also read a memory outside the chip to implement the base station-related function.

It should be understood that the structure of the access network device illustrated in FIG. 6 is merely a possible form, and should not constitute any limitation on embodiments of this application. In this application, a possibility that there may be a base station structure in another form in the future is not excluded.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The core network device may be a core network element, for example, an access and mobility management function (Access and Mobility Management Function, AMF) entity, a session management function (Session Management Function, SMF) entity, a user plane function (User Plane Function, UPF) entity, or a policy control function (Policy Control function, PCF) entity. The AMF entity provides a mobility management function in a core network, and is mainly responsible for access and mobility control, including registration management (registration management, RM) and connection management (connection management, CM), access authentication and access authorization, reachability management, mobility management, and the like. The SMF entity is a session management function in the core network. In addition to performing mobility management on a terminal device, the AMF entity is further responsible for forwarding a session management related message between the terminal device and the SMF entity. The PCF entity is a policy management function in the core network, and is responsible for formulating a policy related to mobility management, session management, charging, and the like of the terminal device. The UPF entity is a user plane function in the core network, performs data transmission with an external data network through an interface, and performs data transmission with an access network device through an interface. The UPF entity mainly provides user plane support, including a connection point between a PDU session and a data network, data packet routing and forwarding, data packet detection and user plane policy enforcement, QoS processing for a user plane, downlink data packet buffering, downlink data notification triggering, and the like.

It should be understood that the functional units of the core network may work independently, or may be combined to implement some control functions. For example, the AMF, the SMF, and the PCF may be combined to serve as a management device, to implement access control and mobility management functions such as access authentication, security encryption, and location registration of the terminal device, session management functions such as user plane transmission path recording, release, and change, and functions such as analysis of data (such as congestion) related to a part of slices (slice) and data related to the terminal device. As a gateway device, the UPF mainly implements functions such as user plane data routing and forwarding, for example, is responsible for filtering a data packet of the terminal device, transmitting/forwarding data, controlling a rate, and generating charging information.

The technical solutions of embodiments of this application may be applied to various communication systems, such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a fifth generation (5th generation, 5G) system or a new radio (new radio, NR) system. In addition, the technical solutions may be further applied to a subsequent evolved system, for example, a sixth generation 6G communication system or even a more advanced seventh generation 7G communication system.

In a core coder, to reduce a coding bit rate, correlation between signals of different frequency bands may be used for coding. A basic principle of using the correlation between the signals of different frequency bands for coding is to generate a high-frequency band signal based on a low-frequency band signal according to a bandwidth extension (Bandwidth Extension, BWE) method. A latest 3GPP enhanced voice services (Enhanced Voice Services, EVS) audio codec, a moving picture experts group high-efficiency advanced audio coding (Moving Picture Experts Group High-Efficiency Advanced Audio Coding, MPEG HE-AAC) audio codec, and a unified speech and audio coding (Unified Speech and Audio Coding, USAC) audio codec use the correlation between the signals of different frequency bands, and use a bandwidth extension technology to code the high-frequency band signal, so as to code the high-frequency band signal with a small quantity of bits, thereby reducing the coding bit rate of the coder. However, in a real audio signal, a spectrum of a high frequency band usually includes a part of spectrums that are not similar to or are weakly correlated with a spectrum of a low frequency band, leading to distortion of reconstruction of the high-frequency band signal.

To resolve the foregoing technical problem, this application provides an audio coding method and an apparatus.

It should be noted that the following method embodiments may be applied to the application scenarios shown in FIG. 1 to FIG. 4, and certainly may alternatively be applied to another scenario. This is not limited in embodiments of this application. It should be further understood that, in embodiments of this application, the method may be performed by the terminal device, the access network device, and the core network device. By way of example, and not limitation, the method may alternatively be performed by a chip, a chip system, a processor, or the like used in the terminal device, the access network device, and the core network device. The terminal device, the access network device, and the core network device have a coding function, and may also be referred to as coding devices.

FIG. 7 is a flowchart of a process 700 of an audio encoding method according to an embodiment of this application. The process 700 is described as a series of steps or operations. It should be understood that the steps or operations of the process 700 may be performed in various sequences and/or simultaneously, not limited to an execution sequence shown in FIG. 7. The process 700 may include the following steps.

Step 701: Obtain a first bitstream, where the first bitstream is obtained based on a first audio signal.

An audio frame sequence is obtained by sampling original audio, and the audio frame sequence includes a plurality of audio frames. Compression processing may be performed frame by frame at an encoder side. For ease of description, in embodiments of this application, an audio frame that is currently being processed is referred to as a current frame.

A feature of an audio signal included in the current frame may be represented by using a frequency, an amplitude, and a phase. In embodiments of this application, the first audio signal and a second audio signal are extracted from the current frame based on frequencies. The first audio signal is an audio signal whose frequency is lower than a preset threshold in the current frame (in embodiments of this application, an audio signal that meets this condition may also be referred to as a low-frequency signal or a low-frequency component). The second audio signal includes an audio signal whose frequency is higher than or equal to the preset threshold in the current frame (in embodiments of this application, an audio signal that meets this condition may also be referred to as a high-frequency signal or a high-frequency component). The preset threshold may be, for example, 16 kHz. This is not specifically limited in embodiments of this application. It should be noted that, in the foregoing descriptions, an audio signal whose frequency is equal to the preset threshold in the current frame is classified as the second audio signal. Optionally, in embodiments of this application, an audio signal whose frequency is equal to the preset threshold in the current frame may alternatively be classified as the first audio signal. This is not specifically limited herein.

In some possible implementations, the first audio signal may be extracted from the current frame via a low-pass filter.

In some possible implementations, a core encoder may be used to encode the first audio signal. For example, the core encoder may be an AVS3 core encoder. This is not specifically limited in embodiments of this application.

Step 702: Obtain side information, where the side information is obtained based on the second audio signal.

In this embodiment of this application, the second audio signal may have the following three cases:
(1) The second audio signal includes only a high-frequency component. In this case, the second audio signal is equivalent to a high-frequency component of the current frame. Correspondingly, the side information may include only feature information of the high-frequency component.
(2) In addition to the high-frequency component, the second audio signal further includes a part of audio signals in the low-frequency component, in other words, the second audio signal and the first audio signal have a part of same audio signals. In this case, the second audio signal is equivalent to the high-frequency component plus the part of the low-frequency component of the current frame. Correspondingly, in addition to the feature information of the high-frequency component, the side information may further include association information between the high-frequency component and the part of the low-frequency component.
(3) In addition to the high-frequency component, the second audio signal further includes all audio signals in the low-frequency component, in other words, the second audio signal includes the first audio signal. In this case, the second audio signal is equivalent to the current frame. Correspondingly, in addition to the feature information of the high-frequency component, the side information may further include the association information between the high-frequency component and the low-frequency component.

It can be learned that, the side information can guide a decoder side to implement non-blind BWE by occupying only a small quantity of transmission bits, to reconstruct the high-frequency component, especially reconstruct a complex signal based on a mapping relationship between the high-frequency component and the low-frequency component.

In some possible implementations, obtaining the side information may include: inputting the second audio signal into a second machine learning model obtained through pre-training to obtain the side information, where the second machine learning model includes at least one submodel. The at least one submodel may focus on different features. For example, a constraint is set for each submodel, including an input/output, a model structure, a processing rule, and the like. In this way, each submodel may focus on extracting side information of a corresponding feature.

In this embodiment of this application, for the second machine learning model, refer to the foregoing neural network, deep neural network, convolutional neural network, recurrent neural network, and the like. The machine learning model may reflect more details of the high-frequency component in the current frame in the feature information. These details are, for example, a feature of the high-frequency component and association between the high-frequency component and the low-frequency component. This helps reconstruct more high-frequency details.

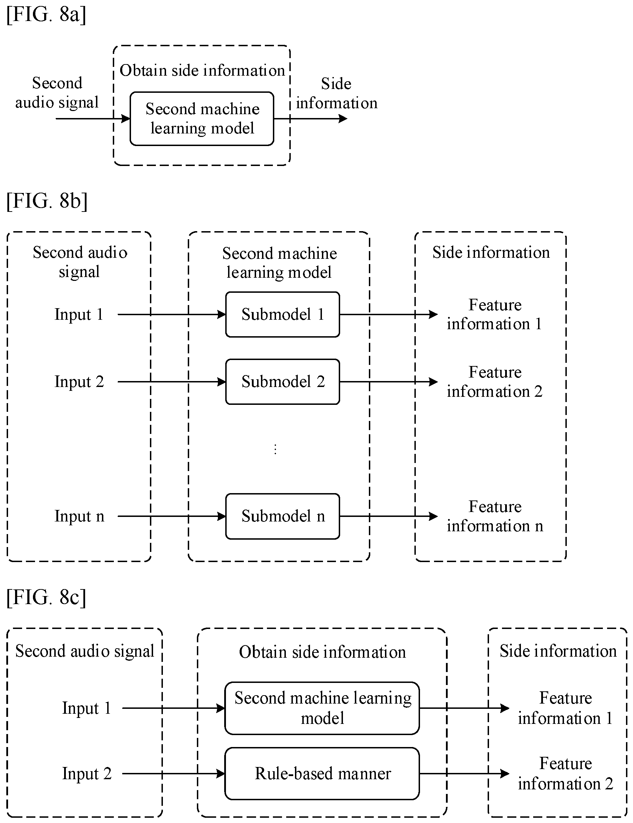

For example, FIG. 8a is a diagram of obtaining the side information according to an embodiment of this application. As shown in FIG. 8a, the side information is obtained by using the second machine learning model. The second machine learning model includes one submodel, in other words, the second machine learning model is the submodel. An input of the second machine learning model is the second audio signal, and an output is the side information.

In some possible implementations, the second machine learning model may include a plurality of submodels, and respective inputs of the plurality of submodels include an audio signal whose frequency is higher than or equal to the preset threshold in the current frame. In other words, the respective inputs of the plurality of submodels are a part of the second audio signal or the entire second audio signal.

For example, FIG. 8b is a diagram of obtaining the side information according to an embodiment of this application. As shown in FIG. 8b, the side information is obtained by using the second machine learning model. The second machine learning model includes a plurality of submodels (n submodels are used as an example in FIG. 8b, and n>1), namely, a submodel 1, a submodel 2, ..., and a submodel n. An input of the submodel 1 is an input 1, and an output is feature information 1; an input of the submodel 2 is an input 2, and an output is feature information 2; ...; and an input of the submodel n is an input n, and an output is feature information n.

The input 1, the input 2, ..., and the input n all come from the second audio signal, and they all include the high-frequency component in the second audio signal. In addition, the input 1, the input 2, ..., and the input n each may further include or not include the low-frequency component in the second audio signal. When the low-frequency component in the second audio signal is included, the input 1, the input 2, ..., and the input n each include a part of the low-frequency component or the entire low-frequency component in the second audio signal. For example, the input 1 includes the high-frequency component in the second audio signal, the input 2 includes the high-frequency component and the part of the low-frequency component in the second audio signal, and the input 3 includes the high-frequency component and the entire low-frequency component in the second audio signal. It should be noted that, in this embodiment of this application, the input 1, the input 2, ..., and the input n may be the same, or may be completely different, or may be partially the same, or may be partially different. This is not specifically limited herein.

In this embodiment of this application, if an input of a submodel includes only a high-frequency component, the submodel is mainly used to compress the high-frequency component into a feature, or represent the high-frequency component using the feature. If the input of the submodel includes a low-frequency component in addition to the high-frequency component, the submodel is further used to extract a mapping relationship between the high-frequency component and the low-frequency component. The plurality of submodels may be used to extract more diversified features from the side information. Therefore, a quantity, a type, a function, and the like of the submodel are not specifically limited in this application.

The respective outputs of the n submodels include the feature information 1, the feature information 2, ..., and the feature information n, and the side information is obtained through combination processing, in other words, the side information includes the feature information output by the n submodels.

In some possible implementations, a first submodel and at least one other submodel in the plurality of submodels include a same neuron, the same neuron is located in an input phase, an output phase, or an intermediate phase of the first submodel, and the first submodel is any one of the plurality of submodels.

The first submodel may have a same neuron (also referred to as a shared neuron) as one or more of the plurality of submodels included in the second machine learning model. The same neuron may have one or more layers, and the one or more layers of neurons may be located in the input phase, the output phase, or the intermediate phase of the submodel. The input phase refers to a first layer at an input end of the submodel and one or more layers after the first layer. The output phase refers to a last layer at an output end of the submodel and one or more layers before the last layer. The intermediate phase refers to one or more layers that do not include the first layer and the last layer of the submodel. It should be noted that a quantity, a type, and the like of the same neuron are not specifically limited in embodiments of this application, and locations of the input phase, the output phase, and the intermediate phase are not specifically limited either.

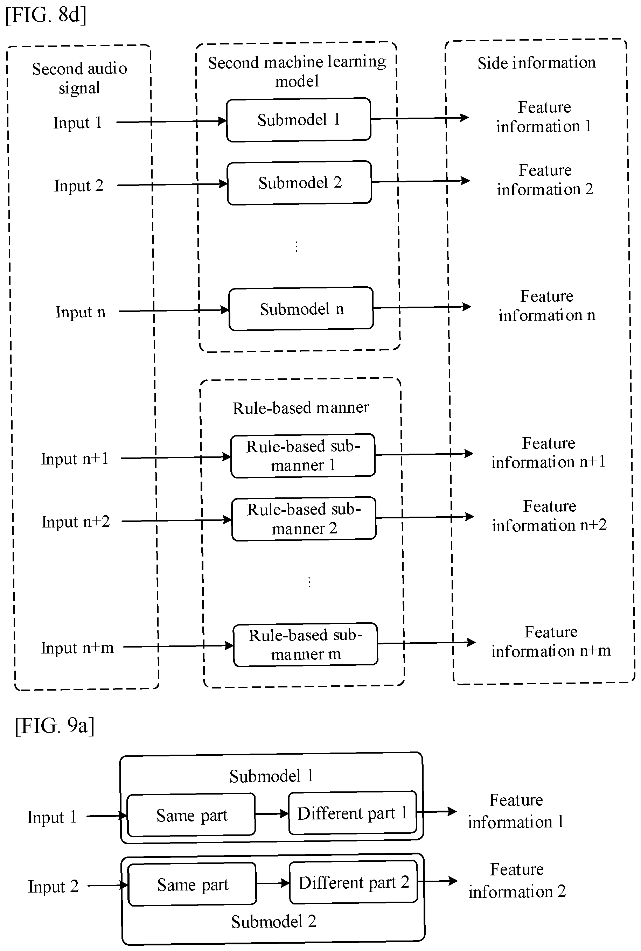

For example, FIG. 9a is a diagram of a same part of two submodels according to an embodiment of this application. As shown in FIG. 9a, the two submodels are used as an example. The two submodels have a same neuron (that is, the same part), and have different respective neurons (that is, different parts).

The same part is located in input phases of a submodel 1 and a submodel 2; a different part 1 of the submodel 1 and a different part 2 of the submodel 2 are respectively located after the same part; and the two submodels respectively output feature information 1 and feature information 2.

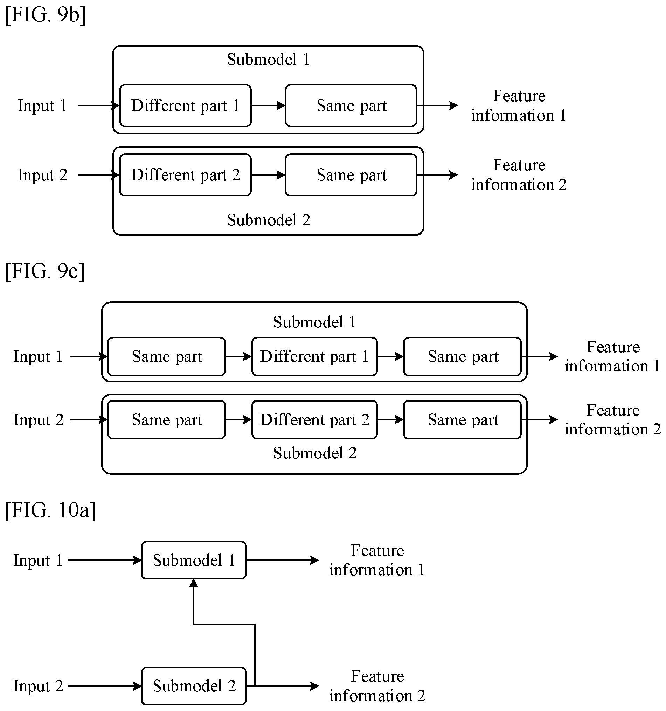

For example, FIG. 9b is a diagram of a same part of two submodels according to an embodiment of this application. As shown in FIG. 9b, the two submodels are used as an example. The two submodels have a same neuron (that is, the same part), and have different respective neurons (that is, different parts).

The same part is located in output phases of a submodel 1 and a submodel 2; a different part 1 of the submodel 1 and a different part 2 of the submodel 2 are respectively located before the same part; and the two submodels respectively output feature information 1 and feature information 2.

For example, FIG. 9c is a diagram of same parts of two submodels according to an embodiment of this application. As shown in FIG. 9c, the two submodels are used as an example. The two submodels have same neurons (that is, the same parts), and have different respective neurons (that is, different parts).

The same parts are located in input phases and output phases of a submodel 1 and a submodel 2; a different part 1 of the submodel 1 and a different part 2 of the submodel 2 are located between the two same parts; and the two submodels respectively output feature information 1 and feature information 2.

It should be noted that the foregoing two examples are described by using the two submodels as an example, but this is not intended to constitute a limitation on a same part between the plurality of submodels. A quantity of the plurality of submodels having the same part and a specific implementation (including locations of the same part, layers included in the same part, and the like) of the same part are not specifically limited in embodiments of this application.

In some possible implementations, an input of the first submodel further includes a first input; when the second machine learning model includes the plurality of submodels, the first input includes an output of the at least one other submodel in the plurality of submodels, or the first input includes an output of at least one rule-based sub-manner; and the first submodel is any one of the plurality of submodels.

For example, FIG. 10a is a diagram of a serial connection of submodels according to an embodiment of this application. As shown in FIG. 10a, two submodels are used as an example. In the two submodels, an output of a submodel 2 may be used as an input of a submodel 1. In this case, the submodel 1 includes an input 1 and the output of the submodel 2. In addition, an output of a rule-based sub-manner may also be used as an input of the submodel 1. In this case, the submodel 1 includes the input 1 and the output of the rule-based sub-manner, and even the output of the submodel 2 may be added. This is not specifically limited herein. This may be a serial connection between submodels or between a submodel and a rule-based sub-manner.

In some possible implementations, an input of the first submodel further includes a second input, and the second input is an audio signal obtained by performing redundant information processing on a first input; when the second machine learning model includes the plurality of submodels, the first input includes an output of the at least one other submodel in the plurality of submodels, or the first input includes an output of at least one rule-based sub-manner; and the first submodel is any one of the plurality of submodels.

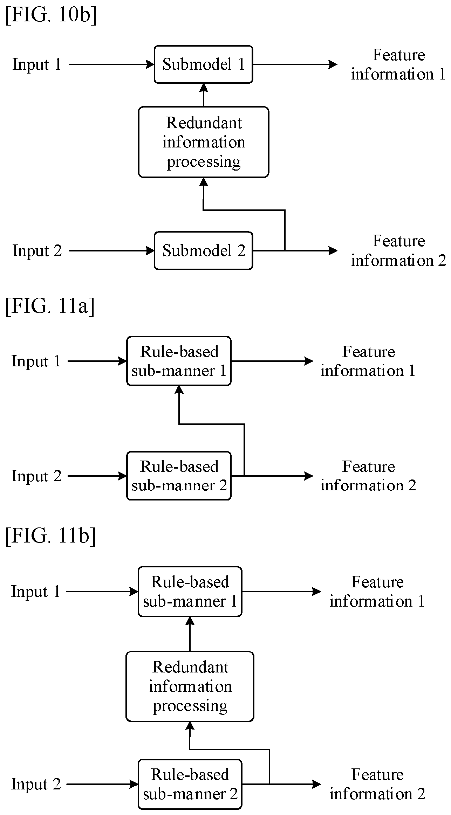

For example, FIG. 10b is a diagram of a serial connection of submodels according to an embodiment of this application. As shown in FIG. 10b, two submodels are used as an example. In the two submodels, redundant information processing is first performed on an output of a submodel 2, and then a processed output may be used as an input of a submodel 1. In this case, the submodel 1 includes an input 1 and the output, obtained through redundant information processing, of the submodel 2. In addition, redundant information processing may also be first performed on an output of a rule-based sub-manner, and then a processed output may be used as an input of the submodel 1. In this case, the submodel 1 includes the input 1 and the output, obtained through redundant information processing, of the rule-based sub-manner, and even the output, obtained through redundant information processing, of the submodel 2 may be added. This is not specifically limited. This may be a serial connection between submodels or between a submodel and a rule-based sub-manner.

It should be noted that the foregoing two examples are described by using two submodels as an example, but this is not intended to constitute a limitation on a serial connection relationship between submodels or between a submodel and a rule-based sub-manner. In addition to an input of any submodel, an input of the any submodel may further include outputs of one or more other submodels or an output obtained through redundancy information processing, and/or outputs of one or more rule-based sub-manners or an output obtained through redundancy information processing. A quantity of series connections and a series connection manner are not limited in embodiments of this application.

In some possible implementations, obtaining the side information may further include: performing processing on the second audio signal in a preset rule-based manner to obtain the side information, where the preset rule-based manner includes the at least one rule-based sub-manner.

In embodiments of this application, a method for extracting a feature in a preset rule-based manner may include, for example, extracting a spectral envelope, and extracting the feature via AVS3. The spectral envelope indicates energy of each frequency band in a spectrum of the current frame, and is used by the decoder side to restore energy of a corresponding frequency band. The feature extracted via AVS3 includes frequency band energy and identifiers of a harmonic feature and a noise feature of each frequency band, and is used by the decoder side to restore a BWE basis. Compared with a machine learning manner, the rule-based manner can retain information such as spectral energy, thereby avoiding impact on perceptual quality.

In embodiments of this application, based on the second machine learning model, the rule-based manner may be further set, and the second audio signal is processed in the rule-based manner, to obtain an output (feature information) corresponding to the second audio signal.

For example, FIG. 8c is a diagram of obtaining the side information according to an embodiment of this application. As shown in FIG. 8c, the side information is obtained by using the second machine learning model and a preset rule-based manner. The second machine learning model includes one submodel, in other words, the second machine learning model is the submodel. An input of the second machine learning model is an input 1, and an output is feature information 1. The rule-based manner includes one rule-based sub-manner, in other words, the preset rule-based manner is the rule-based sub-manner. An input of the rule-based manner is an input 2, and an output is feature information 2.

The input 1 and the input 2 both come from the second audio signal, and include the high-frequency component in the second audio signal. In addition, the input 1 and the input 2 each may further include or not include the low-frequency component in the second audio signal. When the low-frequency component in the second audio signal is included, the input 1 and the input 2 each include a part of the low-frequency component or the entire low-frequency component in the second audio signal. For example, the input 1 includes the high-frequency component in the second audio signal, and the input 2 includes the high-frequency component and the part of the low-frequency component in the second audio signal. It should be noted that, in this embodiment of this application, the input 1 and the input 2 may be the same, or may be completely different, or may be partially the same, or may be partially different. This is not specifically limited herein.

The side information is obtained by performing combination processing on the feature information 1 output by the second machine learning model and the feature information 2 output in the rule-based manner. In other words, the side information includes the feature information output by the second machine learning model and the feature information output in the rule-based manner.

In some possible implementations, the preset rule-based manner may include a plurality of rule-based sub-manners, and respective inputs of the plurality of rule-based sub-manners include an audio signal whose frequency is higher than or equal to the preset threshold in the current frame, in other words, the respective inputs of the plurality of rule-based sub-manners are a part of the second audio signal or the entire second audio signal.

For example, FIG. 8d is a diagram of obtaining the side information according to an embodiment of this application. As shown in FIG. 8d, the side information is obtained by using the second machine learning model and the preset rule-based manner. The second machine learning model includes a plurality of submodels (n submodels are used as an example in FIG. 8d, and n>1), namely, a submodel 1, a submodel 2, ..., and a submodel n. An input of the submodel 1 is an input 1, and an output is feature information 1; an input of the submodel 2 is an input 2, and an output is feature information 2; ...; and an input of the submodel n is an input n, and an output is feature information n. The rule-based manner includes a plurality of rule-based sub-manners (m rule-based sub-manners are used as an example in FIG. 8d, and m>1). To be specific, an input of a rule-based sub-manner 1 is an input n+1, and an output is feature information n+1; an input of a rule-based sub-manner 2 is an input n+2, and an output is feature information n+2; ...; and an input of a rule-based sub-manner m is an input n+m, and an output is feature information n+m.

The input 1, the input 2, ..., the input n, the input n+1, the input n+2, ..., and the input n+m all come from the second audio signal, and include the high-frequency component in the second audio signal. In addition, the input 1, the input 2, ..., the input n, the input n+1, the input n+2, ..., and the input n+m each may further include or not include the low-frequency component in the second audio signal. When the low-frequency component in the second audio signal is included, the input 1, the input 2, ..., the input n, the input n+1, the input n+2, ..., and the input n+m each include a part of the low-frequency component or the entire low-frequency component in the second audio signal. For example, the input 1 includes the high-frequency component in the second audio signal, the input 2 includes the high-frequency component and the part of the low-frequency component in the second audio signal, and the input 3 includes the high-frequency component and the entire low-frequency component in the second audio signal. It should be noted that, in this embodiment of this application, the input 1, the input 2, ..., the input n, the input n+1, the input n+2, ..., and the input n+m may be the same, or may be completely different, or may be partially the same, or may be partially different. This is not specifically limited herein.

The respective outputs of the n submodels and the m rule-based manners include the feature information 1, the feature information 2, ..., the feature information n, the feature information n+1, the feature information n+2, ..., and the feature information n+m. The side information is obtained through combination processing, in other words, the side information includes the feature information output by the n submodels and the feature information output in the m rule-based manners.

In some possible implementations, an input of a first rule-based sub-manner further includes a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

For example, FIG. 11a is a diagram of a serial connection of rule-based sub-manners according to an embodiment of this application. As shown in FIG. 11a, two rule-based sub-manners are used as an example. In the two rule-based sub-manners, an output of a rule-based sub-manner 2 may be used as an input of a rule-based sub-manner 1. In this case, the rule-based sub-manner 1 includes an input 1 and the output of the rule-based sub-manner 2. In addition, an output of a submodel may also be used as an input of the rule-based sub-manner 1. In this case, the rule-based sub-manner 1 includes the input 1 and the output of the submodel, and even the output of the rule-based sub-manner 2 may be added. This is not specifically limited. This may be a serial connection between rule-based sub-manners or between a rule-based sub-manner and a submodel.

In some possible implementations, an input of a first rule-based sub-manner further includes a fourth input, where the fourth input is an audio signal obtained by performing redundant information processing on a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

For example, FIG. 11b is a diagram of a serial connection of rule-based sub-manners according to an embodiment of this application. As shown in FIG. 11b, two rule-based sub-manners are used as an example. In the two rule-based sub-manners, redundant information processing is first performed on an output of a rule-based sub-manner 2, and then a processed output may be used as an input of a rule-based sub-manner 1. In this case, the rule-based sub-manner 1 includes an input 1 and the output, obtained through redundant information processing, of the rule-based sub-manner 2. In addition, redundant information processing may also be first performed on an output of a submodel, and then a processed output may be used as an input of the rule-based sub-manner 1. In this case, the rule-based sub-manner 1 includes the input 1 and the output, obtained through redundant information processing, of the submodel, and even the output, obtained through redundant information processing, of the rule-based sub-manner 2 may be added. This is not specifically limited. This may be a serial connection between rule-based sub-manners or between a rule-based sub-manner and a submodel.

It should be noted that the foregoing examples are described by using two rule-based sub-manners as an example, but this is not intended to constitute a limitation on a serial connection relationship between rule-based sub-manners or between a rule-based sub-manner and a submodel. In addition to an input of any rule-based sub-manner, an input of the any rule-based sub-manner may further include outputs of one or more other rule-based sub-manners or an output obtained through redundancy information processing, and/or outputs of one or more submodels or an output obtained through redundancy information processing. A quantity of series connections and a series connection manner are not limited in embodiments of this application.

In some possible implementations, joint training may be performed on the second machine learning model and/or the rule-based manner for obtaining the side information. To be specific, information redundancy between feature groups is reduced or eliminated by jointly training a plurality of mechanisms for obtaining the side information (the mechanism may be the submodel or the rule-based sub-manner); a joint loss function is set for the plurality of mechanisms for obtaining the side information, and weights of the plurality of mechanisms for obtaining the side information are corrected through error back propagation, to achieve overall optimal effect of a plurality of pieces of feature information, thereby reducing or eliminating information redundancy between the feature groups; and each mechanism for obtaining the side information may have a respective loss function that is used to retain uniqueness of feature information extracted by the mechanism.

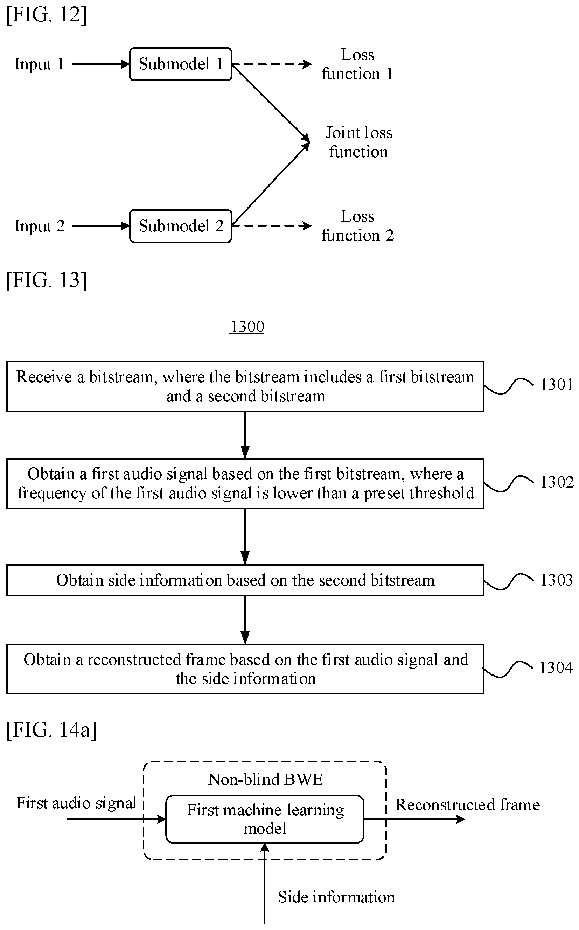

For example, FIG. 12 is a diagram of joint training according to an embodiment of this application. As shown in FIG. 12, two mechanisms for obtaining the side information (the mechanism may be the foregoing submodel or rule-based sub-manner) are used as an example. Each mechanism for obtaining the side information may have a respective loss function (a loss function 1 and a loss function 2), and a joint loss function is set for the two mechanisms for obtaining the side information. These loss functions are used to correct, through error back propagation, weights of the two mechanisms for obtaining the side information, to achieve overall optimal effect of two pieces of feature information. Uniqueness of the feature information extracted by the mechanisms can be retained. In addition, information redundancy between two feature groups can be reduced or eliminated.

Step 703: Obtain a second bitstream based on the side information.

In this embodiment of this application, the side information may be encoded via a side information encoder. The side information encoder and the core encoder may use a same encoding algorithm, or may use different encoding algorithms. This is not specifically limited herein.

Step 704: Transmit a bitstream, where the bitstream includes the first bitstream and the second bitstream.

The bitstream obtained at the encoder side includes two parts: one part of the bitstream (the first bitstream) corresponds to the low-frequency component of the current frame, and the other part of the bitstream (the second bitstream) corresponds to the side information of the current frame. The encoder side transmits the bitstream to the decoder side, so that the decoder side obtains, based on the bitstream, a reconstructed low-frequency component and side information, thereby obtaining a reconstructed frame corresponding to the current frame.

In this embodiment, side information is extracted from audio by using a machine learning model, to guide the decoder side to implement non-blind BWE, thereby reconstructing the high-frequency component, especially a high-frequency component weakly associated with the low-frequency component. In this implementation, more details of the high-frequency component in the current frame may be reflected in the feature information. These details are, for example, the feature of the high-frequency component and association between the high-frequency component and the low-frequency component. This helps reconstruct more high-frequency details, thereby avoiding audio distortion.

FIG. 13 is a flowchart of a process 1300 of an audio decoding method according to an embodiment of this application. The process 1300 is described as a series of steps or operations. It should be understood that the steps or operations of the process 1300 may be performed in various sequences and/or simultaneously, not limited to an execution sequence shown in FIG. 13. The process 1300 may include the following steps.

Step 1301: Receive a bitstream, where the bitstream includes a first bitstream and a second bitstream.

In this embodiment of this application, a bitstream from an encoder side is received. Corresponding to the bitstream generated at the encoder side, the received bitstream also includes two parts: the first bitstream and the second bitstream.

Step 1302: Obtain a first audio signal based on the first bitstream, where a frequency of the first audio signal is lower than a preset threshold.

In this embodiment of this application, a core decoder may parse the first bitstream to obtain the first audio signal,
A reconstructed frame to be obtained at a decoder side corresponds to a current frame at the encoder side. A feature of an audio signal included in the reconstructed frame may also be represented by using a frequency, an amplitude, and a phase. Based on frequency division, the reconstructed frame also includes the first audio signal and a second audio signal. The first audio signal is an audio signal whose frequency is lower than the preset threshold (in embodiments of this application, an audio signal that meets this condition may also be referred to as a low-frequency signal or a low-frequency component). The second audio signal is an audio signal whose frequency is higher than or equal to the preset threshold (in embodiments of this application, an audio signal that meets this condition may also be referred to as a high-frequency signal or a high-frequency component). That is, the reconstructed frame includes the low-frequency component and the high-frequency component. The preset threshold may be, for example, 16 kHz. This is not specifically limited in embodiments of this application. It should be noted that, in the foregoing descriptions, an audio signal whose frequency is equal to the preset threshold is classified as the second audio signal. Optionally, in embodiments of this application, an audio signal whose frequency is equal to the preset threshold may alternatively be classified as the first audio signal. This is not specifically limited herein.

Based on this, the first audio signal obtained based on the first bitstream may be the low-frequency component of the reconstructed frame, that is, the decoder side may directly obtain the low-frequency component of the reconstructed frame by parsing the bitstream.

Step 1303: Obtain side information based on the second bitstream.

The side information is used to represent a feature of the second audio signal. In addition, the side information may be further used to represent a mapping relationship between the high-frequency component and the low-frequency component. In this embodiment of this application, the side information can guide the decoder side to implement non-blind BWE by occupying only a small quantity of transmission bits, to reconstruct the high-frequency component, especially a high-frequency component that has a close relationship but has a complex mapping relationship with the low-frequency component.

In some possible implementations, obtaining the side information based on the second bitstream may include directly parsing the second bitstream to obtain the side information. The second bitstream is obtained by the encoder side by processing the side information. Therefore, the decoder side may directly parse the second bitstream to obtain the side information.

Optionally, the second bitstream is first parsed to obtain unprocessed side information, and then side information processing is performed on the unprocessed side information to obtain the side information. The side information processing includes inputting a third machine learning model obtained through pre-training or performing processing in a preset third rule-based manner.

In this embodiment of this application, information carried in the second bitstream may be the unprocessed side information associated with the side information. The information may be obtained by the encoder side based on the side information to further save a bitstream, and then encoded into the bitstream. Correspondingly, to obtain the side information, the decoder side may first parse the unprocessed side information obtained based on the second bitstream, and then obtain the side information based on the unprocessed side information. The foregoing method for obtaining the side information may include obtaining the side information by using the third machine learning model or in the preset third rule-based manner.

Step 1304: Obtain the reconstructed frame based on the first audio signal and the side information.

In some possible implementations, the reconstructed frame may be obtained based on the first audio signal and the side information by using a first machine learning model obtained through pre-training. Because the reconstructed frame is obtained based on the side information, to implement extension from the low-frequency component to the high-frequency component, obtaining the reconstructed frame may also be referred to as non-blind BWE.

In this embodiment of this application, for the first machine learning model, refer to the foregoing neural network, deep neural network, convolutional neural network, recurrent neural network, and the like.

For example, FIG. 14a is a diagram of non-blind BWE according to an embodiment of this application. As shown in FIG. 14a, non-blind BWE is implemented by using the first machine learning model. The first machine learning model includes one submodel, in other words, the first machine learning model is the submodel. An input of the first machine learning model is the first audio signal and the side information, and an output is the reconstructed frame.

Optionally, the reconstructed frame is directly output by the first machine learning model.

In this embodiment of this application, during non-blind BWE, a machine learning model (the first machine learning model) may be used; and under guidance of the side information, the reconstructed frame is directly output based on the low-frequency component (the first audio signal) obtained through decoding. In addition, the first machine learning model may complete coding distortion correction of the low-frequency component and possible audio rendering. This is not specifically limited in embodiments of this application.

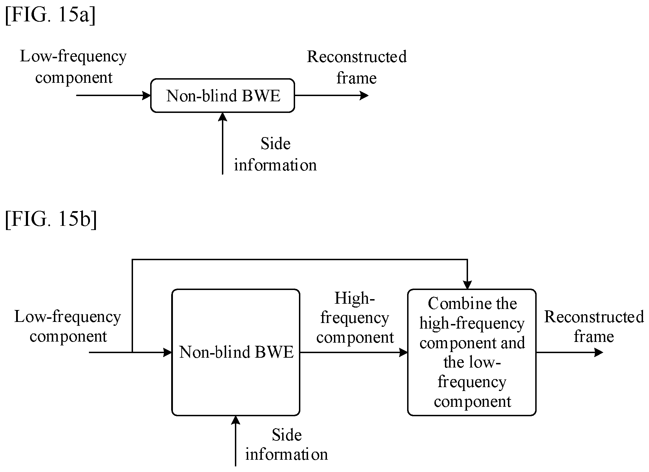

For example, FIG. 15a is a diagram of obtaining the reconstructed frame according to an embodiment of this application. As shown in FIG. 15a, an input of non-blind BWE includes the low-frequency component and the side information, and an output is the reconstructed frame.

Optionally, the reconstructed frame is obtained based on the second audio signal output by the first machine learning model and the first audio signal.

In this embodiment of this application, during non-blind BWE, a machine learning model (the first machine learning model) may be used; under guidance of the side information, a reconstructed high-frequency component is output based on the low-frequency component (the first audio signal) obtained through decoding; and the low-frequency component obtained through decoding and the reconstructed high-frequency component are combined or added, to obtain reconstructed audio. In addition, the first machine learning model may complete coding distortion correction of the low-frequency component and possible audio rendering. This is not specifically limited in embodiments of this application.

For example, FIG. 15b is a diagram of obtaining the reconstructed frame according to an embodiment of this application. As shown in FIG. 15b, an input of non-blind BWE includes the low-frequency component and the side information, and an output is the reconstructed high-frequency component. Then, the high-frequency component and the low-frequency component are combined to obtain the reconstructed frame.

In some possible implementations, the first machine learning model may include a first submodel and a second submodel. During non-blind BWE, the first audio signal and first side information may be input into the first submodel to obtain a third audio signal; and then the third audio signal and second side information may be input into the second submodel to obtain the reconstructed frame. Each of the first side information and the second side information is a part of the side information or the entire side information.

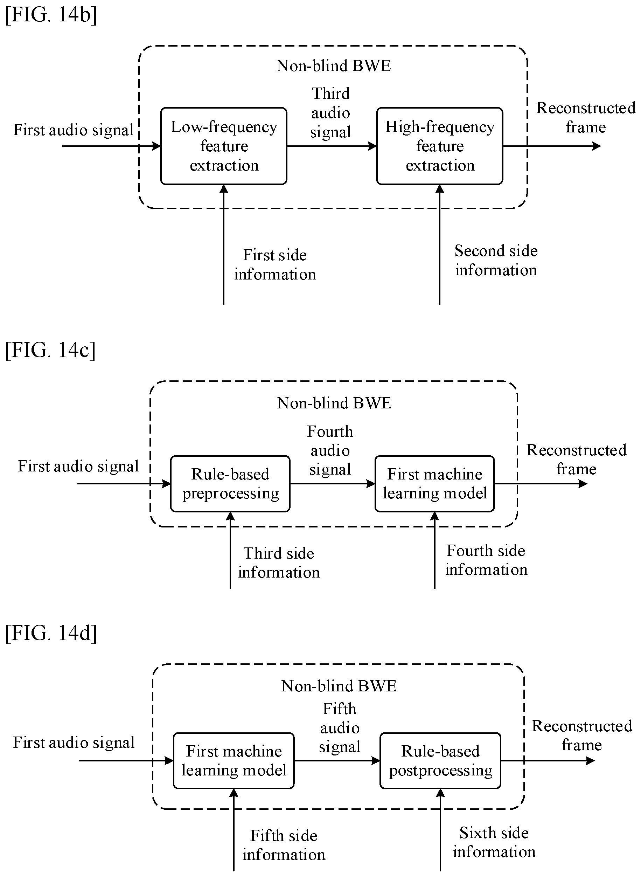

For example, FIG. 14b is a diagram of non-blind BWE according to an embodiment of this application. As shown in FIG. 14b, the first machine learning model used during non-blind BWE may be divided into the first submodel (corresponding to low-frequency feature extraction) and the second submodel (corresponding to high-frequency component reconstruction). The two submodels are connected in series, to be specific, an output (the third audio signal, that is, a low-frequency feature) of low-frequency feature extraction may be used as an input of high-frequency component reconstruction; an input of low-frequency feature extraction includes the first audio signal and the first side information, and an input of high-frequency component reconstruction includes the third audio signal and the second side information; low-frequency feature extraction is guided by the first side information, and high-frequency component reconstruction is guided by the second side information; and an output of high-frequency component reconstruction is the reconstructed frame. It should be noted that, in embodiments of this application, each of the first side information and the second side information may be the part of the side information or the entire side information, and the first side information and the second side information may be the same or different. This is not specifically limited herein.

In some possible implementations, during non-blind BWE, the first audio signal and third side information may be processed in a preset first rule-based manner to obtain a fourth audio signal; and then the fourth audio signal and fourth side information may be input into the first machine learning model to obtain the reconstructed frame. Each of the third side information and the fourth side information is a part of the side information or the entire side information.

For example, FIG. 14c is a diagram of non-blind BWE according to an embodiment of this application. As shown in FIG. 14c, corresponding to the encoder side, when the encoder side obtains the side information in a rule-based manner, the decoder side may also correspondingly use the rule-based manner during non-blind BWE. The rule-based manner may be set before machine learning, to be specific, processing is first performed in the first rule-based manner (corresponding to rule-based preprocessing), where an input of rule-based preprocessing is the first audio signal and the third side information, and an output is the fourth audio signal; and then the first machine learning model is used, where an input of the first machine learning model is the fourth audio signal and the fourth side information, and an output is the reconstructed frame. It should be noted that, in embodiments of this application, each of the third side information and the fourth side information may be the part of the side information or the entire side information, and the third side information and the fourth side information may be the same or different. This is not specifically limited herein.

In some possible implementations, during non-blind BWE, a fifth audio signal may be obtained based on the first audio signal and fifth side information by using the first machine learning model obtained through pre-training; and then processing may be performed based on the fifth audio signal and sixth side information in a preset second rule-based manner to obtain the reconstructed frame. Each of the fifth side information and the sixth side information is a part of the side information or the entire side information.

For example, FIG. 14d is a diagram of non-blind BWE according to an embodiment of this application. As shown in FIG. 14d, corresponding to the encoder side, when the encoder side obtains the side information in a rule-based manner, the decoder side may also correspondingly use the rule-based manner during non-blind BWE. The rule-based manner may be set after machine learning, to be specific, the first machine learning model is first used, where an input of the first machine learning model is the first audio signal and the fifth side information, and an output is the fifth audio signal; and then processing is performed in the second rule-based manner, where an input of the second rule-based manner is the fifth audio signal and the sixth side information, and an output is the reconstructed frame. It should be noted that, in embodiments of this application, each of the fifth side information and the sixth side information may be the part of the side information or the entire side information, and the fifth side information and the sixth side information may be the same or different. This is not specifically limited herein.

It should be noted that in the embodiments shown in FIG. 14a to FIG. 14d, an example in which non-blind BWE directly outputs the reconstructed frame (refer to FIG. 15a) is used. It should be understood that in embodiments of this application, the reconstructed frame may alternatively be obtained according to the method in the embodiment shown in FIG. 15b. In addition, in the embodiments shown in FIG. 14c and FIG. 14d, for the first machine learning model used during non-blind BWE, refer to the embodiment shown in FIG. 14b.

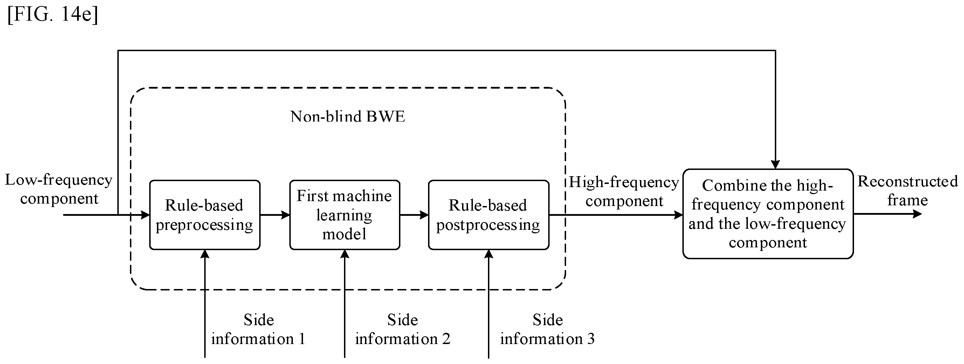

For example, FIG. 14e is a diagram of non-blind BWE according to an embodiment of this application. As shown in FIG. 14e, during non-blind BWE, rule-based preprocessing is first performed, where an input of rule-based preprocessing is a low-frequency component and side information 1; then, the first machine learning model is used, where an input of the first machine learning model is side information 2 and an output obtained through rule-based preprocessing; then rule-based postprocessing is performed, where an input of rule-based postprocessing is an output of the first machine learning model and side information 3, and an output is a high-frequency component; and finally, the low-frequency component and the high-frequency component are combined to output a reconstructed frame.

It should be noted that each of the side information 1 to the side information 3 may be a part of the side information or the entire side information, and the side information 1 to the side information 3 may be completely the same or completely different, or partially the same, or partially different. This is not specifically limited herein.

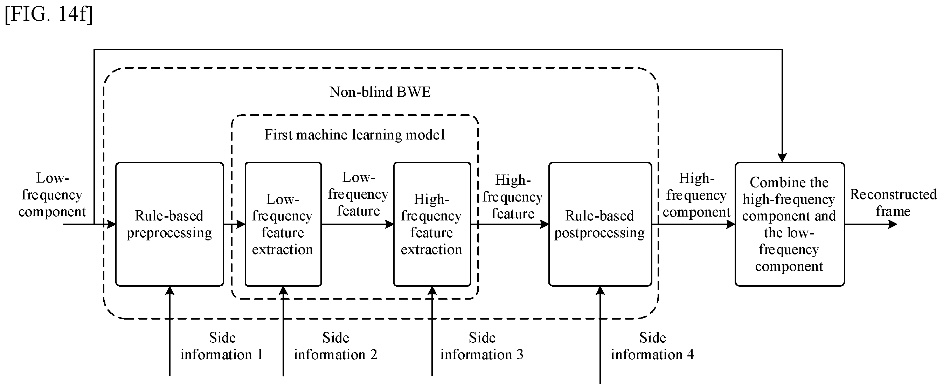

For example, FIG. 14f is a diagram of non-blind BWE according to an embodiment of this application. As shown in FIG. 14f, during non-blind BWE, rule-based preprocessing is first performed, where an input of rule-based preprocessing is a low-frequency component and side information 1; then low-frequency feature extraction in the first machine learning model is used, where an input of low-frequency feature extraction is side information 2 and an output obtained through rule-based preprocessing, and an output is a low-frequency feature; then, high-frequency component reconstruction in the first machine learning model is used, where an input of high-frequency component reconstruction is the low-frequency feature and side information 3, and an output is a high-frequency feature; then, rule-based postprocessing is performed, where an input of rule-based postprocessing is the high-frequency feature and side information 4, and an output is the high-frequency component; and finally, the low-frequency component and the high-frequency component are combined to output a reconstructed frame.

It should be noted that each of the side information 1 to the side information 4 may be a part of the side information or the entire side information, and the side information 1 to the side information 4 may be completely the same or completely different, or partially the same, or partially different. This is not specifically limited herein.

In this embodiment, under guidance of the side information, a machine learning model is used to obtain a reconstructed frame based on a low-frequency component, especially a reconstructed frame in a scenario in which a high-frequency component is weakly associated with the low-frequency component or the high and low-frequency components have a close relationship but a complex mapping relationship. In this implementation, more details of the high-frequency component may be reflected in feature information. These details are, for example, a feature of the high-frequency component and association between the high-frequency component and the low-frequency component. This helps reconstruct more high-frequency details, thereby avoiding audio distortion.

The following uses several specific embodiments to describe in detail the technical solutions of the method embodiments shown in FIG. 7 and FIG. 13.

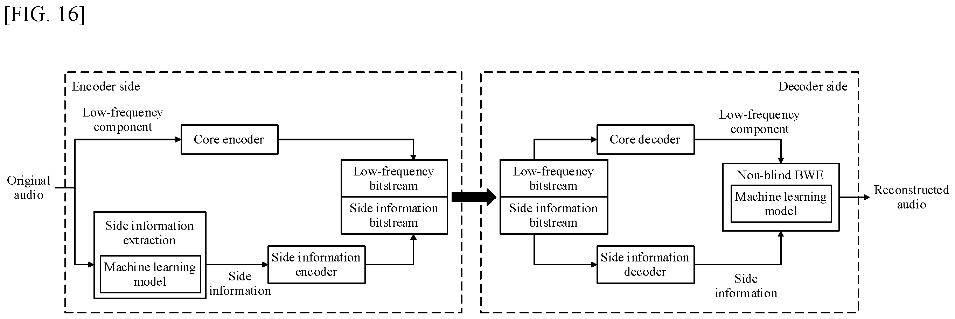

FIG. 16 is a diagram of a non-blind BWE coding framework including AI according to an embodiment of this application. As shown in FIG. 16, the framework includes the following steps.
1. An encoder side converts original audio into a bitstream.
   1.1. A low-frequency component of the original audio is input into a core encoder, and the core encoder encodes the low-frequency component into a low-frequency bitstream (corresponding to the foregoing first bitstream). Refer to step 701.
   1.2. A machine learning model is used in a side information extraction phase. The machine learning model extracts a feature that helps BWE from audio that includes a high-frequency component of the original audio, where the feature is referred to as side information. Refer to step 702.
   1.3. The side information is input into a side information encoder, and the side information encoder encodes the side information into a side information bitstream (corresponding to the foregoing second bitstream). Refer to step 703.
   1.4. The side information bitstream and the low-frequency bitstream are combined to obtain the bitstream, and the bitstream is transmitted to a decoder side over a transmission network.
2. The decoder side reconstructs audio based on the bitstream.
   2.1. After the bitstream is received, the bitstream is parsed into the low-frequency bitstream and the side information bitstream. Refer to step 1301.
   2.2. The low-frequency bitstream is input into a core decoder, and the core decoder decodes the low-frequency bitstream into the low-frequency component. Refer to step 1302.
   2.3. The side information bitstream is input into a side information decoder, and the side information decoder decodes the side information bitstream into the side information. Refer to step 1303.
   2.4. Non-blind BWE uses a machine learning model, and the machine learning model outputs reconstructed audio based on the low-frequency component obtained through decoding under guidance of the side information. In addition, the machine learning model may further complete coding distortion correction of the low-frequency component and possible audio rendering.

Optionally, in step 2.4, a reconstructed high-frequency component may be first obtained with reference to the manner in FIG. 15b, and then the reconstructed audio is obtained.

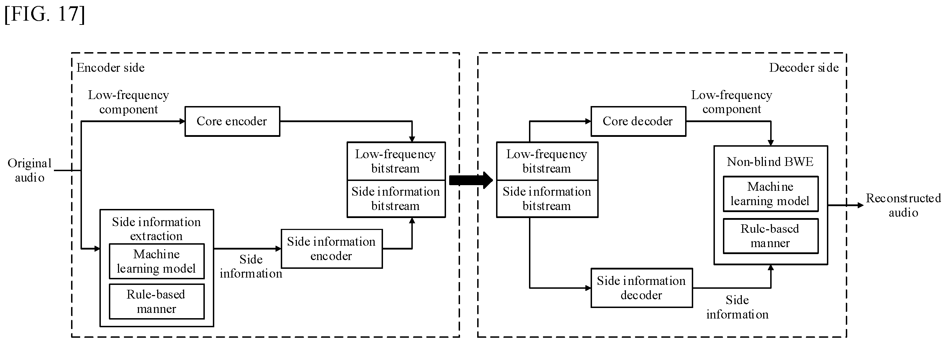

FIG. 17 is a diagram of a non-blind BWE coding framework including AI according to an embodiment of this application. As shown in FIG. 17, based on the embodiment shown in FIG. 16, in this embodiment, in addition to the machine learning model, a rule-based manner is further used in the side information extraction step of the encoder side. In this way, the side information output in the side information extraction step includes feature information output by the machine learning model and feature information output in the rule-based manner. In a non-blind BWE phase of the decoder side, in addition to the machine learning model, the rule-based manner is further used. In this way, the reconstructed audio output in the non-blind BWE phase combines an output of the machine learning model and an output in the rule-based manner.

For several implementations of the side information extraction step in this embodiment, refer to the embodiments shown in FIG. 8b to FIG. 8d, FIG. 9a to FIG. 9c, FIG. 10a and FIG. 10b, and FIG. 11a and FIG. 11b.

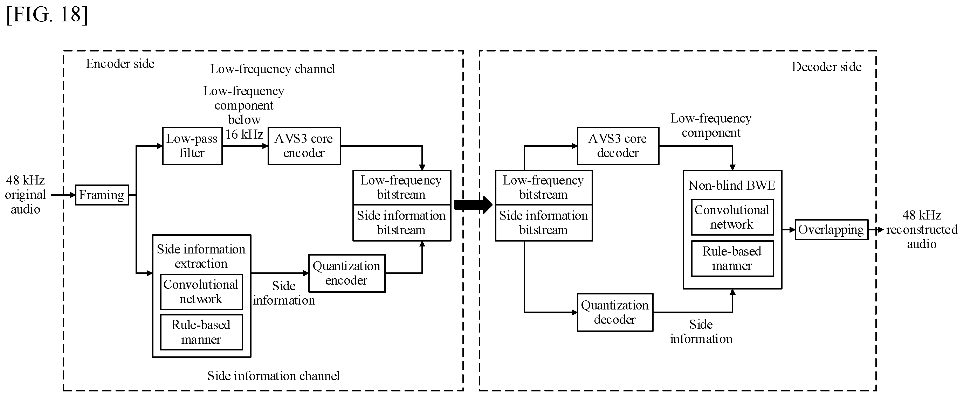

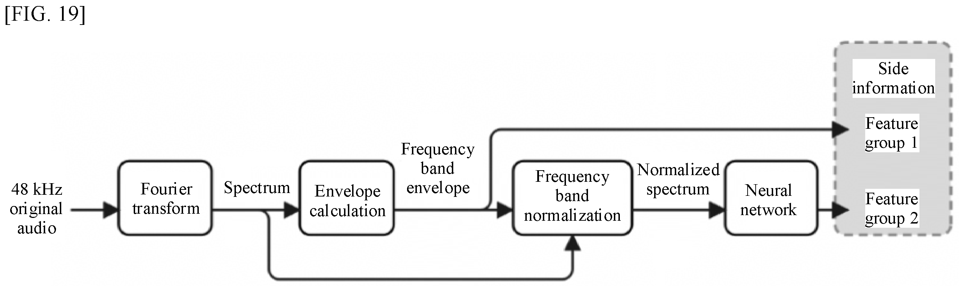

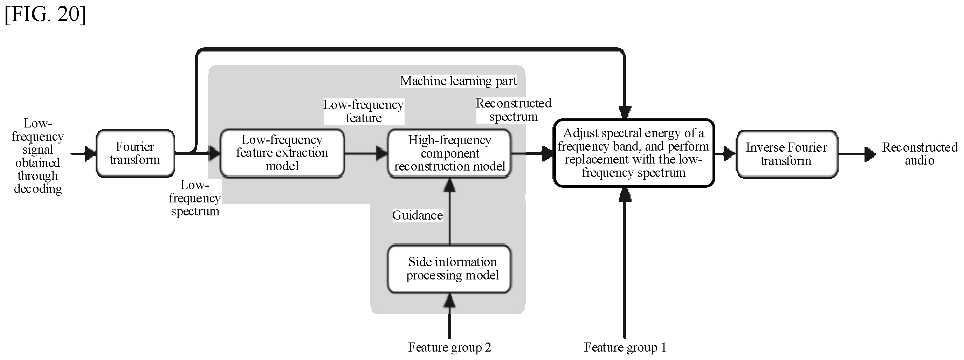

FIG. 18 is a diagram of a non-blind BWE coding framework including AI according to an embodiment of this application. As shown in FIG. 18, this embodiment is based on an AVS3 coding framework, and implements 48 kHz audio coding. A core codec is responsible for encoding and reconstructing a low-frequency component below 16 kHz through encoding and decoding, a side information extraction step is responsible for extracting side information, and a non-blind BWE step is responsible for reconstructing a high-frequency component from 16 kHz to 48 kHz. The framework includes the following steps.
1. An encoder side converts a 48 kHz original audio into a bitstream.
   1.1. Framing is performed on the 48 kHz original audio. A length of each frame is 2048 sampling points, and 1024 sampling points are overlapped between frames. These signal frames are processed in sequence.
   1.2. A low-frequency component below 16 kHz in a signal frame is encoded in a low-frequency channel.
   1.2.1. An audio signal lower than 16 kHz is extracted from the signal frame via a low-pass filter, that is, the low-frequency component.
   1.2.2. The low-frequency component below 16 kHz is encoded into a low-frequency bitstream via an AVS3 core encoder.
   1.3. The high-frequency component from 16 kHz to 48 kHz in a signal frame is encoded in a side information channel.
   1.3.1. The side information extraction step is used to extract the side information from the signal frame, as shown in FIG. 19 (FIG. 19 is a flowchart of a side information extraction step according to an embodiment of this application).
   1.3.1.1. The signal frame is transformed into a spectrum through Fourier transform.
   1.3.1.2. A high-frequency region of the spectrum is divided into a plurality of frequency bands, to perform envelope calculation, to be specific, an average value of spectral energy of each frequency band is calculated, and the average value is used as a frequency band envelope (a feature group 1).
   1.3.1.3. A spectrum of each frequency band of the high-frequency region is divided by a frequency band envelope corresponding to the frequency band, the spectral energy of these frequency bands is changed to 1, and energy envelope information included in the spectrum is eliminated. A spectrum obtained through frequency band normalization is referred to as a normalized spectrum.
   1.3.1.4. The normalized spectrum is input into a neural network, where the neural network extracts features (a feature group 2) from the normalized spectrum.
   1.3.1.5. The feature group 1 and the feature group 2 are combined into the side information.
   1.3.2. A quantization encoder quantizes the side information into a side information bitstream.
   1.4. The low-frequency bitstream and the side information bitstream are combined into a bitstream, and the bitstream is transmitted to a decoder side.
2. The decoder side reconstructs 48 kHz original audio based on the bitstream.
   2.1. The bitstream transmitted by the encoder side is received, and the bitstream is split into the low-frequency bitstream and the side information bitstream.
   2.2. The low-frequency component below 16 kHz is obtained by decoding the low-frequency bitstream via an AVS3 core decoder.
   2.3. The side information is obtained by decoding the side information bitstream via a quantization decoder.
   2.4. The non-blind BWE step is responsible for reconstructing, under guidance of the side information obtained through decoding, a high-frequency signal based on a low-frequency signal below 16 kHz obtained through decoding, as shown in FIG. 20 (FIG. 20 is a flowchart of a non-blind BWE step according to an embodiment of this application).
   2.4.1. The low-frequency component obtained through decoding is transformed into a low-frequency spectrum through Fourier transform.
   2.4.2. A low-frequency feature is extracted from the low-frequency spectrum by using a low-frequency feature extraction model.
   2.4.3. A side information processing model maps the feature group 2 to a high-frequency feature.
   2.4.4. A high-frequency component reconstruction model reconstructs, under guidance of the high-frequency feature, the high-frequency component based on the low-frequency feature, to obtain a reconstructed spectrum.
   2.4.5. The spectral energy of the corresponding frequency band is adjusted based on the feature group 1 to ensure that the spectral energy of each frequency band is the same as real spectral energy, and a spectrum below 16 kHz is replaced with the low-frequency spectrum to obtain an adjusted spectrum.
   2.4.6. Inverse Fourier transform is performed on the adjusted spectrum to obtain reconstructed audio.
   2.5. The low-frequency component obtained through decoding and the reconstructed high-frequency component are added, and then overlap processing is performed, to obtain 48 kHz reconstructed audio.

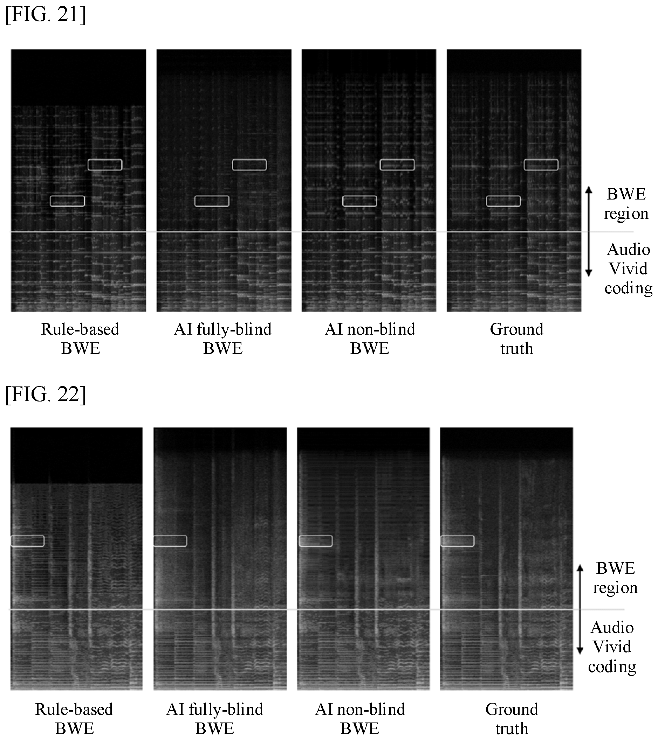

Under a same experimental condition, results of rule-based BWE, AI-based fully-blind BWE, and AI-based non-blind BWE (the technical solutions in embodiments of this application) are compared with a ground-truth audio siginal. Experimental results are shown in FIG. 21 and FIG. 22 (FIG. 21 and FIG. 22 are diagrams of comparison between audio spectra obtained in three BWE manners).

During rule-based BWE, a low-frequency spectrum is copied to a high frequency, and energy of each frequency band is adjusted based on side information. Therefore, the method cannot extend a texture that does not exist in a low-frequency component. Spectra in boxed regions in FIG. 21 and FIG. 22 are copied from the low frequency, and are obviously different from an actual spectrum, resulting in a perceptual quality difference.

During AI-based fully-blind BWE, a part of a high-frequency component may be reconstructed based on a low-frequency component. Because a spectrum with a higher frequency is less correlated with a low-frequency spectrum, distortion of a spectrum reconstructed by a model is also greater. As a result, as a frequency increases, high-frequency energy reconstructed by the model gradually decreases. In addition, a part of the high-frequency component exists independently. Without guidance of side information, the model cannot determine whether these components exist, or reconstruct these components.

Compared with rule-based BWE and AI-based fully-blind BWE, a high-frequency spectrum reconstructed during AI-based non-blind BWE is obviously closer to reality, and is more consistent with original audio in terms of perceptual quality. Compared with rule-based BWE, a mapping relationship, mined by using an AI model, between a high-frequency component and a low-frequency component is more complex and comprehensive. Therefore, side information extracted by an AI-based side information extraction module can include more abundant spectrum features, and an AI-based non-blind BWE module can also reconstruct a large quantity of more accurate high-frequency details based on the side information. A rule-based preprocessing module may construct a high-frequency basis under guidance of the side information, to simplify subsequent AI computation. The side information is introduced into a low-frequency feature extraction module and a high-frequency component reconstruction module, so that effects that a low-frequency feature satisfying the side information is extracted and a high-frequency component satisfying the side information is reconstructed can be achieved. Rule-based postprocessing further adjusts a reconstructed high-frequency component based on the side information, to ensure that the high-frequency component meets a prior feature. For example, spectral envelope energy of each frequency band may be adjusted based on the side information, to ensure accuracy of the envelope energy.

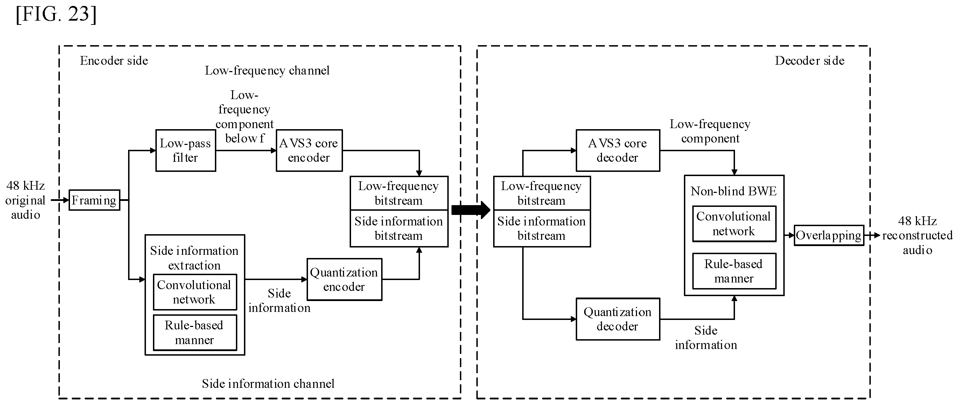

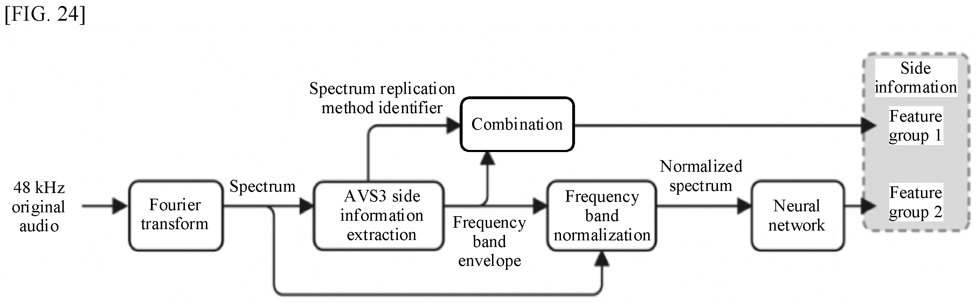

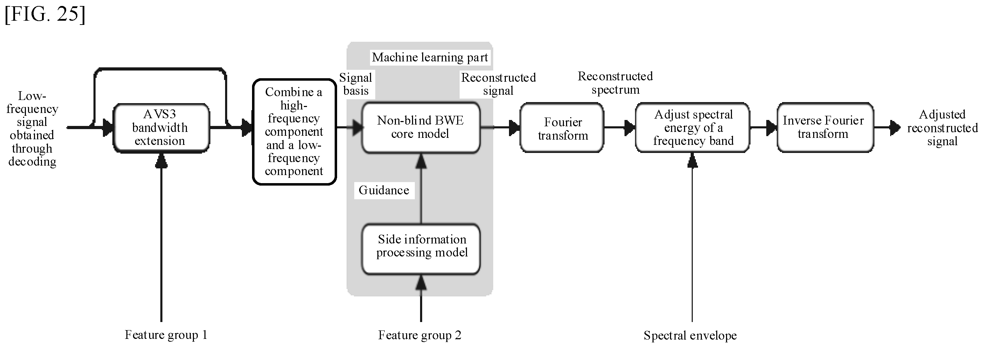

FIG. 23 is a diagram of a non-blind BWE coding framework including AI according to an embodiment of this application. As shown in FIG. 23, this embodiment is based on an AVS3 coding framework, and implements 48 kHz audio coding. A core codec is responsible for encoding and reconstructing a low-frequency component below a specified frequency f through encoding and decoding, a side information extraction step is responsible for extracting side information, and a non-blind BWE step is responsible for reconstructing a high-frequency component from f to 48 kHz. The framework includes the following steps.
1. An encoder side converts 48 kHz original audio into a bitstream.
   1.1. Framing is performed on the 48 kHz original audio. A length of each frame is 2048 sampling points, and 1024 sampling points are overlapped between frames. These signal frames are processed in sequence.
   1.2. A frequency boundary f is specified, and a low-frequency component below f in a signal frame is encoded in a low-frequency channel.
   1.2.1. A low-frequency signal below f is extracted from the 48 kHz original audio via a low-pass filter, that is, the low-frequency component.
   1.2.2. The low-frequency component below f is encoded into a low-frequency bitstream via an AVS3 core encoder.
   1.3. The high-frequency component from f to 48 kHz is encoded in a side information channel.
   1.3.1. The side information extraction step is used to extract the side information from the 48 kHz original audio, as shown in FIG. 24 (FIG. 24 is a flowchart of a side information extraction step according to an embodiment of this application).
   1.3.1.1. The signal frame is transformed into a spectrum through Fourier transform.
   1.3.1.2. A high-frequency region of the spectrum is divided into a plurality of frequency bands via a side information extraction module built in AVS3, to perform envelope calculation, to be specific, an average value of spectral energy of each frequency band is calculated, and the average value is used as a frequency band envelope; a frequency band replication method identifier adopted by each frequency band is calculated; and the frequency band envelope and the spectrum replication method identifier are combined into a feature group 1.
   1.3.1.3. A spectrum of each frequency band of the high-frequency region is divided by a frequency band envelope corresponding to the frequency band, the spectral energy of these frequency bands is changed to 1, and energy envelope information included in the spectrum is eliminated. A spectrum obtained through frequency band normalization is referred to as a normalized spectrum.
   1.3.1.4. The normalized spectrum is input into a neural network, where the neural network extracts features (a feature group 2) from the normalized spectrum.
   1.3.1.5. The feature group 1 and the feature group 2 are combined into the side information.
   1.3.2. A quantization encoder quantizes the side information into a side information bitstream.
   1.4. The low-frequency bitstream, the side information bitstream, and f are combined into a bitstream, and the bitstream is transmitted to a decoder side.
2. The decoder side reconstructs 48 kHz original audio based on the bitstream.
   2.1. The bitstream transmitted by the encoder side is received, and the bitstream is split into the low-frequency bitstream and the side information bitstream.
   2.2. The low-frequency signal below f is obtained by decoding the low-frequency bitstream via an AVS3 core decoder.
   2.3. The side information is obtained by decoding the side information bitstream via a quantization decoder.
   2.4. The non-blind BWE step is responsible for reconstructing, under guidance of the side information obtained through decoding, a high-frequency signal based on the low-frequency signal below f obtained through decoding, as shown in FIG. 25 (FIG. 25 is a flowchart of a non-blind BWE step according to an embodiment of this application).
   2.4.1. The low-frequency component obtained through decoding and the feature group 1 are input into AVS3 bandwidth extension module, a high-frequency component is obtained through extension according to a rule-based BWE manner, and the high-frequency component and the low-frequency component are added to obtain a signal basis.
   2.4.2. A side information processing model maps the feature group 2 to a high-frequency feature.
   2.4.3. Under guidance of the high-frequency feature, a non-blind BWE model obtains a reconstructed signal based on the signal basis.
   2.4.4. Fourier transform is performed on the reconstructed signal to obtain a reconstructed spectrum. The spectral energy of the corresponding frequency band is adjusted based on frequency band envelopes of the feature group 1, to ensure that the spectral energy of each frequency band is the same as real spectral energy. Then, inverse Fourier transform is performed on an adjusted spectrum to obtain an adjusted reconstructed signal.
   2.5. Overlap processing is performed on the adjusted reconstructed signal to obtain 48 kHz reconstructed audio.

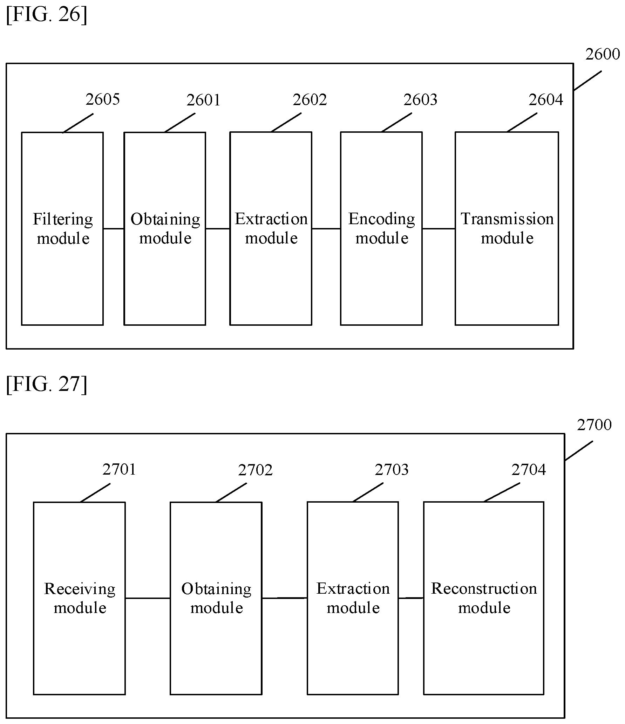

FIG. 26 is a diagram of a structure of an encoding apparatus 2600 according to an embodiment of this application. As shown in FIG. 26, the encoding apparatus 2600 in this embodiment may be used in the foregoing encoding device. The encoding apparatus 2600 may include an obtaining module 2601, an extraction module 2602, an encoding module 2603, a transmission module 2604, and a filtering module 2605.

The obtaining module 2601 is configured to obtain a first bitstream, where the first bitstream is obtained based on a first audio signal, and the first audio signal is a low-frequency signal whose frequency is lower than a preset threshold in a current frame. The extraction module 2602 is configured to obtain side information, where the side information is obtained based on a second audio signal, and the second audio signal includes a high-frequency signal whose frequency is higher than or equal to the preset threshold in the current frame. The encoding module 2603 is configured to obtain a second bitstream based on the side information. The transmission module 2604 is configured to transmit a bitstream, where the bitstream includes the first bitstream and the second bitstream.

In a possible implementation, the extraction module 2602 is specifically configured to input the second audio signal into a second machine learning model obtained through pre-training to obtain the side information, where the second machine learning model includes at least one submodel.

In a possible implementation, when the second machine learning model includes a plurality of submodels, respective inputs of the plurality of submodels include a part of the second audio signal or the entire second audio signal, where the part of the audio signal includes the high-frequency signal.

In a possible implementation, a first submodel and at least one other submodel in the plurality of submodels include a same neuron, the same neuron is located in an input phase, an output phase, or an intermediate phase of the first submodel, and the first submodel is any one of the plurality of submodels.

In a possible implementation, the side information includes feature information output by the plurality of submodels.

In a possible implementation, when the second machine learning model includes one submodel, the side information includes feature information output by the one submodel.

In a possible implementation, the extraction module 2602 is specifically configured to perform processing based on the second audio signal in a preset rule-based manner to obtain the side information, where the preset rule-based manner includes at least one rule-based sub-manner.

In a possible implementation, when the preset rule-based manner includes a plurality of rule-based sub-manners, respective inputs of the plurality of rule-based sub-manners include the part of the second audio signal or the entire second audio signal, where the part of the audio signal includes the high-frequency signal.

In a possible implementation, the side information includes feature information output in the plurality of rule-based sub-manners.

In a possible implementation, when the preset rule-based manner includes one rule-based sub-manner, the side information includes feature information output in the one rule-based sub-manner.

In a possible implementation, an input of the first submodel further includes a first input; when the second machine learning model includes the plurality of submodels, the first input includes an output of the at least one other submodel in the plurality of submodels, or the first input includes an output of the at least one rule-based sub-manner; and the first submodel is any one of the plurality of submodels.

In a possible implementation, an input of the first submodel further includes a second input, and the second input is an audio signal obtained by performing redundant information processing on a first input; when the second machine learning model includes the plurality of submodels, the first input includes an output of the at least one other submodel in the plurality of submodels, or the first input includes an output of the at least one rule-based sub-manner; and the first submodel is any one of the plurality of submodels.

In a possible implementation, an input of a first rule-based sub-manner further includes a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

In a possible implementation, an input of a first rule-based sub-manner further includes a fourth input, where the fourth input is an audio signal obtained by performing redundant information processing on a third input; when the preset rule-based manner includes the plurality of rule-based sub-manners, the third input includes an output of at least one other rule-based sub-manner in the plurality of rule-based sub-manners, or the third input includes the output of the at least one submodel; and the first rule-based sub-manner is any one of the plurality of rule-based sub-manners.

In a possible implementation, the filtering module 2605 is configured to obtain the first audio signal from the current frame in a low-pass filtering manner.

In a possible implementation, the second audio signal further includes a part of the first audio signal or the entire first audio signal.

The apparatus in this embodiment may be configured to perform the technical solution in the method embodiment shown in FIG. 7. Implementation principles and technical effect thereof are similar. Details are not described herein again.

FIG. 27 is a diagram of a structure of a decoding apparatus 2700 according to an embodiment of this application. As shown in FIG. 27, the decoding apparatus 2700 in this embodiment may be used in the foregoing decoding device. The decoding apparatus 2700 may include a receiving module 2701, an obtaining module 2702, an extraction module 2703, and a reconstruction module 2704.

The receiving module 2701 is configured to receive a bitstream, where the bitstream includes a first bitstream and a second bitstream. The obtaining module 2702 is configured to obtain a first audio signal based on the first bitstream, where a frequency of the first audio signal is lower than a preset threshold. The extraction module 2703 is configured to obtain side information based on the second bitstream, where the side information is used to represent a feature of a second audio signal, and a frequency of the second audio signal is higher than or equal to the preset threshold. The reconstruction module 2704 is configured to obtain a reconstructed frame based on the first audio signal and the side information.

In a possible implementation, the reconstruction module 2704 is specifically configured to obtain the reconstructed frame based on the first audio signal and the side information by using a first machine learning model obtained through pre-training.

In a possible implementation, the reconstructed frame is directly output by the first machine learning model, or the reconstructed frame is obtained based on the second audio signal output by the first machine learning model and the first audio signal.

In a possible implementation, when the first machine learning model includes a first submodel and a second submodel, the reconstruction module 2704 is specifically configured to: input the first audio signal and first side information into the first submodel to obtain a third audio signal; and input the third audio signal and second side information into the second submodel to obtain the reconstructed frame, where each of the first side information and the second side information is a part of the side information or the entire side information.

In a possible implementation, the reconstruction module 2704 is specifically configured to: perform processing based on the first audio signal and third side information in a preset first rule-based manner to obtain a fourth audio signal; and input the fourth audio signal and fourth side information into the first machine learning model to obtain the reconstructed frame, where each of the third side information and the fourth side information is a part of the side information or the entire side information.

In a possible implementation, the reconstruction module 2704 is specifically configured to: obtain a fifth audio signal based on the first audio signal and the fifth side information by using the first machine learning model obtained through pre-training; and perform processing based on the fifth audio signal and sixth side information in a preset second rule-based manner to obtain the reconstructed frame, where each of the fifth side information and the sixth side information is a part of the side information or the entire side information.

In a possible implementation, the extraction module 2703 is specifically configured to parse the second bitstream to obtain the side information.

In a possible implementation, the extraction module 2703 is specifically configured to: parse the second bitstream to obtain unprocessed side information; and perform side information processing on the unprocessed side information to obtain the side information, where the side information processing includes inputting a third machine learning model obtained through pre-training or performing processing in a preset third rule-based manner.

The apparatus in this embodiment may be configured to perform the technical solution in the method embodiment shown in FIG. 13. Implementation principles and technical effect thereof are similar. Details are not described herein again.

In an implementation process, steps in the foregoing method embodiments may be completed using a hardware integrated logical circuit in the processor, or using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another appropriate type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An audio encoding method, comprising:
obtaining a first bitstream, wherein the first bitstream is obtained based on a first audio signal, and the first audio signal is a low-frequency signal whose frequency is lower than a preset threshold in a current frame;
obtaining side information, wherein the side information is obtained based on a second audio signal, and the second audio signal comprises a high-frequency signal whose frequency is higher than or equal to the preset threshold in the current frame;
obtaining a second bitstream based on the side information; and
transmitting a bitstream, wherein the bitstream comprises the first bitstream and the second bitstream.

2. The method according to claim 1, wherein obtaining the side information comprises:
inputting the second audio signal into a second machine learning model obtained through pre-training to obtain the side information, wherein the second machine learning model comprises at least one submodel.

3. The method according to claim 2, wherein when the second machine learning model comprises a plurality of submodels, respective inputs of the plurality of submodels comprise a part of the second audio signal or the entire second audio signal, wherein the part of the audio signal comprises the high-frequency signal.

4. The method according to claim 3, wherein a first submodel and at least one other submodel in the plurality of submodels comprise a same neuron, the same neuron is located in an input phase, an output phase, or an intermediate phase of the first submodel, and the first submodel is any one of the plurality of submodels.

5. The method according to any one of claims 2 to 4, wherein obtaining the side information comprises:
performing processing on the second audio signal in a preset rule-based manner to obtain the side information, wherein the preset rule-based manner comprises at least one rule-based sub-manner.

6. The method according to claim 5, wherein when the preset rule-based manner comprises a plurality of rule-based sub-manners, respective inputs of the plurality of rule-based sub-manners comprise the part of the second audio signal or the entire second audio signal, wherein the part of the audio signal comprises the high-frequency signal.

7. The method according to claim 5 or 6, wherein an input of the first submodel further comprises a first input; when the second machine learning model comprises the plurality of submodels, the first input comprises an output of the at least one other submodel in the plurality of submodels, or the first input comprises an output of the at least one rule-based sub-manner; and the first submodel is any one of the plurality of submodels.

8. The method according to claim 5 or 6, wherein an input of the first submodel further comprises a second input, and the second input is an audio signal obtained by performing redundant information processing on a first input; when the second machine learning model comprises the plurality of submodels, the first input comprises an output of the at least one other submodel in the plurality of submodels, or the first input comprises an output of the at least one rule-based sub-manner; and the first submodel is any one of the plurality of submodels.

9. The method according to any one of claims 5 to 8, wherein an input of a first rule-based sub-manner further comprises a third input; when the preset rule-based manner comprises the plurality of rule-based sub-manners, the third input comprises an output of at least one other rule-based sub-manner in the plurality of rule-based sub-manners, or the third input comprises the output of the at least one submodel; and the first rule-based sub-manner is any one of the plurality of rule-based sub-manners.

10. The method according to any one of claims 5 to 8, wherein an input of a first rule-based sub-manner further comprises a fourth input, wherein the fourth input is an audio signal obtained by performing redundant information processing on a third input; when the preset rule-based manner comprises the plurality of rule-based sub-manners, the third input comprises an output of at least one other rule-based sub-manner in the plurality of rule-based sub-manners, or the third input comprises the output of the at least one submodel; and the first rule-based sub-manner is any one of the plurality of rule-based sub-manners.

11. An audio decoding method, comprising:
receiving a bitstream, wherein the bitstream comprises a first bitstream and a second bitstream;
obtaining a first audio signal based on the first bitstream, wherein a frequency of the first audio signal is lower than a preset threshold;
obtaining side information based on the second bitstream, wherein the side information is used to represent a feature of a second audio signal, and a frequency of the second audio signal is higher than or equal to the preset threshold; and
obtaining a reconstructed frame based on the first audio signal and the side information.

12. The method according to claim 11, wherein obtaining the reconstructed frame based on the first audio signal and the side information comprises:
obtaining the reconstructed frame based on the first audio signal and the side information by using a first machine learning model obtained through pre-training.

13. The method according to claim 12, wherein the reconstructed frame is directly output by the first machine learning model, or the reconstructed frame is obtained based on the second audio signal output by the first machine learning model and the first audio signal.

14. The method according to claim 12 or 13, wherein when the first machine learning model comprises a first submodel and a second submodel, obtaining the reconstructed frame based on the first audio signal and the side information by using the first machine learning model obtained through pre-training comprises:
inputting the first audio signal and first side information into the first submodel to obtain a third audio signal; and
inputting the third audio signal and second side information into the second submodel to obtain the reconstructed frame, wherein each of the first side information and the second side information is a part of the side information or the entire side information.

15. The method according to any one of claims 12 to 14, wherein obtaining the reconstructed frame based on the first audio signal and the side information by using the first machine learning model obtained through pre-training comprises:
performing processing based on the first audio signal and third side information in a preset first rule-based manner to obtain a fourth audio signal; and
inputting the fourth audio signal and fourth side information into the first machine learning model to obtain the reconstructed frame, wherein each of the third side information and the fourth side information is a part of the side information or the entire side information.

16. The method according to any one of claims 12 to 15, wherein obtaining the reconstructed frame based on the first audio signal and the side information by using the first machine learning model obtained through pre-training comprises:
obtaining a fifth audio signal based on the first audio signal and the fifth side information by using the first machine learning model obtained through pre-training; and
performing processing based on the fifth audio signal and sixth side information in a preset second rule-based manner to obtain the reconstructed frame, wherein each of the fifth side information and the sixth side information is a part of the side information or the entire side information.

17. The method according to any one of claims 11 to 16, wherein obtaining the side information based on the second bitstream comprises:
parsing the second bitstream to obtain the side information.

18. The method according to any one of claims 11 to 16, wherein obtaining the side information based on the second bitstream comprises:
parsing the second bitstream to obtain unprocessed side information; and
performing side information processing on the unprocessed side information to obtain the side information, wherein the side information processing comprises inputting a third machine learning model obtained through pre-training or performing processing in a preset third rule-based manner.

19. An encoding apparatus, comprising:
an obtaining module, configured to obtain a first bitstream, wherein the first bitstream is obtained based on a first audio signal, and the first audio signal is a low-frequency signal whose frequency is lower than a preset threshold in a current frame;
an extraction module, configured to obtain side information, wherein the side information is obtained based on a second audio signal, and the second audio signal comprises a high-frequency signal whose frequency is higher than or equal to the preset threshold in the current frame;
an encoding module, configured to obtain a second bitstream based on the side information; and
a transmission module, configured to transmit a bitstream, wherein the bitstream comprises the first bitstream and the second bitstream.

20. The apparatus according to claim 19, wherein the extraction module is specifically configured to input the second audio signal into a second machine learning model obtained through pre-training to obtain the side information, wherein the second machine learning model comprises at least one submodel.

21. The apparatus according to claim 20, wherein when the second machine learning model comprises a plurality of submodels, respective inputs of the plurality of submodels comprise a part of the second audio signal or the entire second audio signal, wherein the part of the audio signal comprises the high-frequency signal.

22. The apparatus according to claim 21, wherein a first submodel and at least one other submodel in the plurality of submodels comprise a same neuron, the same neuron is located in an input phase, an output phase, or an intermediate phase of the first submodel, and the first submodel is any one of the plurality of submodels.

23. The apparatus according to any one of claims 20 to 22, wherein the extraction module is specifically configured to perform processing based on the second audio signal in a preset rule-based manner to obtain the side information, wherein the preset rule-based manner comprises at least one rule-based sub-manner.

24. The apparatus according to claim 23, wherein when the preset rule-based manner comprises a plurality of rule-based sub-manners, respective inputs of the plurality of rule-based sub-manners comprise the part of the second audio signal or the entire second audio signal, wherein the part of the audio signal comprises the high-frequency signal.

25. The apparatus according to claim 23 or 24, wherein an input of the first submodel further comprises a first input; when the second machine learning model comprises the plurality of submodels, the first input comprises an output of the at least one other submodel in the plurality of submodels, or the first input comprises an output of the at least one rule-based sub-manner; and the first submodel is any one of the plurality of submodels.

26. The apparatus according to claim 23 or 24, wherein an input of the first submodel further comprises a second input, and the second input is an audio signal obtained by performing redundant information processing on a first input; when the second machine learning model comprises the plurality of submodels, the first input comprises an output of the at least one other submodel in the plurality of submodels, or the first input comprises an output of the at least one rule-based sub-manner; and the first submodel is any one of the plurality of submodels.

27. The apparatus according to any one of claims 23 to 26, wherein an input of a first rule-based sub-manner further comprises a third input; when the preset rule-based manner comprises the plurality of rule-based sub-manners, the third input comprises an output of at least one other rule-based sub-manner in the plurality of rule-based sub-manners, or the third input comprises the output of the at least one submodel; and the first rule-based sub-manner is any one of the plurality of rule-based sub-manners.

28. The apparatus according to any one of claims 23 to 26, wherein an input of a first rule-based sub-manner further comprises a fourth input, wherein the fourth input is an audio signal obtained by performing redundant information processing on a third input; when the preset rule-based manner comprises the plurality of rule-based sub-manners, the third input comprises an output of at least one other rule-based sub-manner in the plurality of rule-based sub-manners, or the third input comprises the output of the at least one submodel; and the first rule-based sub-manner is any one of the plurality of rule-based sub-manners.

29. A decoding apparatus, comprising:
a receiving module, configured to receive a bitstream, wherein the bitstream comprises a first bitstream and a second bitstream;
an obtaining module, configured to obtain a first audio signal based on the first bitstream, wherein a frequency of the first audio signal is lower than a preset threshold;
an extraction module, configured to obtain side information based on the second bitstream, wherein the side information is used to represent a feature of a second audio signal, and a frequency of the second audio signal is higher than or equal to the preset threshold; and
a reconstruction module, configured to obtain a reconstructed frame based on the first audio signal and the side information.

30. The apparatus according to claim 29, wherein the reconstruction module is specifically configured to obtain the reconstructed frame based on the first audio signal and the side information by using a first machine learning model obtained through pre-training.

31. The apparatus according to claim 30, wherein the reconstructed frame is directly output by the first machine learning model, or the reconstructed frame is obtained based on the second audio signal output by the first machine learning model and the first audio signal.

32. The apparatus according to claim 30 or 31, wherein when the first machine learning model comprises a first submodel and a second submodel, the reconstruction module is specifically configured to: input the first audio signal and first side information into the first submodel to obtain a third audio signal; and input the third audio signal and second side information into the second submodel to obtain the reconstructed frame, wherein each of the first side information and the second side information is a part of the side information or the entire side information.

33. The apparatus according to any one of claims 30 to 32, wherein the reconstruction module is specifically configured to: perform processing based on the first audio signal and third side information in a preset first rule-based manner to obtain a fourth audio signal; and input the fourth audio signal and fourth side information into the first machine learning model to obtain the reconstructed frame, wherein each of the third side information and the fourth side information is a part of the side information or the entire side information.

34. The apparatus according to any one of claims 30 to 33, wherein the reconstruction module is specifically configured to: obtain a fifth audio signal based on the first audio signal and the fifth side information by using the first machine learning model obtained through pre-training; and perform processing based on the fifth audio signal and sixth side information in a preset second rule-based manner to obtain the reconstructed frame, wherein each of the fifth side information and the sixth side information is a part of the side information or the entire side information.

35. The apparatus according to any one of claims 29 to 34, wherein the extraction module is specifically configured to parse the second bitstream to obtain the side information.

36. The apparatus according to any one of claims 29 to 34, wherein the extraction module is specifically configured to: parse the second bitstream to obtain unprocessed side information; and perform side information processing on the unprocessed side information to obtain the side information, wherein the side information processing comprises inputting a third machine learning model obtained through pre-training or performing processing in a preset third rule-based manner.

37. A device, comprising:
one or more processors; and
a memory, configured to store one or more programs; and
when the one or more programs are executed by the one or more processors, the one or more processors are enabled to implement the method according to any one of claims 1 to 18.

38. A computer-readable storage medium, comprising a computer program, wherein when the computer program is executed on a computer, the computer is enabled to perform the method according to any one of claims 1 to 18.

39. A computer program product, wherein the computer program product comprises computer program code, and when the computer program code is run on a computer, the computer is enabled to perform the method according to any one of claims 1 to 18.
